# EUROPEAN PATENT APPLICATION

(11) **EP 4 654 732 A2**
(43) Date of publication of application: **26.11.2025**
(21) Application number: 25206998.4
(22) Date of filing: 07.04.2021
(51) Int. Cl.: H04W 74/0833

(54) **DATA COMMUNICATION IN AN INACTIVE STATE**

(30) Priority: 07.04.2020 US 202063006707 P
(62) Divisional of application: 21722044.1
(71) Applicant: GOOGLE LLC, Mountain View CA 94043 (US)
(72) Inventor: Chih-Hsiang, WU, Mountain View, 94043 (US)
(74) Representative: Marks & Clerk GST

(57) **Abstract**

To communicate data in an inactive state associated with a protocol for controlling radio resources, a UE determines, when the UE is in the inactive state, that data is available for transmission to a RAN (1602). The UE applies a security function to the data to generate a secured packet (1604) and transmits the secured packet to the RAN while the UE is in the inactive state (1606). In response to determining that the RAN has not received the secured packet, performing at least one of (i) re-transmitting the secured packet in an uplink message associated with a second random access procedure, or (ii) transmitting, to the RAN, a request to resume or set up a radio connection.

## Description

### FIELD OF THE DISCLOSURE

This disclosure relates generally to wireless communications and, more particularly, to communication of uplink and/or downlink data at a user equipment (UE) when the UE operates in an inactive state associated with a protocol for controlling radio resources.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Generally speaking, a base station operating a cellular radio access network (RAN) communicates with a user equipment (UE) using a certain radio access technology (RAT) and multiple layers of a protocol stack. For example, the physical layer (PHY) of a RAT provides transport channels to the Medium Access Control (MAC) sublayer, which in turn provides logical channels to the Radio Link Control (RLC) sublayer, and the RLC sublayer in turn provides RLC channels to the Packet Data Convergence Protocol (PDCP) sublayer. The Radio Resource Control (RRC) sublayer is disposed above the RLC sublayer.

The RRC sublayer specifies the RRC_IDLE state, in which a UE does not have an active radio connection with a base station; the RRC_CONNECTED state, in which the UE has an active radio connection with the base station; and the RRC_INACTIVE to allow a UE to more quickly transition back to the RRC_CONNECTED state due to Radio Access Network (RAN)-level base station coordination and RAN-paging procedures. When the UE is in the RRC_INACTIVE state, the UE must transition to the RRC_CONNECTED state in order to start transmitting data in the uplink direction. To this end, the UE must perform the RRC resume procedure, which requires the UE to transmit a *RRCResumeRequest* message to the base station, receive a *RRCResume* command in response from the base station, and transmit a *RRCResumeComplete* message to the base station to confirm that the state transition is complete.

In some cases, the UE in the RRC_INACTIVE state has only one, relatively small packet to transmit. In these cases, the UE still performs the RRC resume procedure with a base station to transition to the RRC_CONNECTED state. After the UE transmits the packet, the UE waits to receive an *RRCRelease* message from the base station to configure the UE to transition back to the RRC_INACTIVE state.

### SUMMARY

A network device of this disclosure reduces latency in uplink transmission of data when a UE operates in the inactive state associated with a protocol for controlling radio resources between the UE and a base station (e.g., the RRC_INACTIVE state of the RRC protocol). When the UE in RRC_INACTIVE detects data available for transmission to the RAN, the UE applies one or more security functions to the data to generate a secured packet. The security function can be for example an encryption function or an integrity protection function. As a more specific example, if integrity protection is enabled, the UE generates a message authentication code for integrity (MAC-I) based on the data, so that the secured packet includes the data and the MAC-I. If encryption is enabled, the UE generates an encrypted packet. If both integrity protection and encryption are enabled, the UE generates a MAC-I for protecting integrity of the packet and encrypts the packet along with the MAC-I to generate an encrypted packet and an encrypted MAC-I. The UE operating in RRC_INACTIVE state then transmits the UL PDU to the RAN.

One example embodiment of these techniques is a method in a UE for communicating data in an inactive state associated with a protocol for controlling radio resources. The method can be executed by processing hardware and includes determining, when the UE is in the inactive state, that data is available for transmission to a RAN; applying a security function to the data to generate a secured packet; and transmitting secured packet to the RAN while the UE is in the inactive state.

Another example embodiment of these techniques is a UE including processing hardware and configured to implement the method above.

Yet another example embodiment of these techniques is a method in a first base station for processing a secured packet from a UE, which can be implemented by processing hardware. The method includes receiving the secured packet when the UE is operating in an inactive state associated with a protocol for controlling radio resources, the secured packet including data and an identity of the UE; identifying, based on the identity of the UE, a second base station with which the UE communicated in an active state prior to transitioning to the inactive state; and transmitting the data to the second base station.

Another example embodiment of these techniques is a base station including processing hardware and configured to implement the method above.

### BRIEF DESCRIPTION OF THE DRAWINGS

Fig. 1A is a block diagram of an example wireless communication system in which a user device and a base station of this disclosure can implement the techniques of this disclosure for reducing latency in uplink transmissions;
Fig. 1B is a block diagram of an example base station in which a centralized unit (CU) and a distributed unit (DU) that can operate in the system of Fig. 1A;
Fig. 2 is a block diagram of an example protocol stack according to which the UE of Fig. 1A communicates with base stations;
Fig. 3 is a block diagram of an example UE that can operate in the system of Fig. 1A;
Fig. 4A is a messaging diagram of a known four-step random channel access (RACH) procedure;
Fig. 4B is a messaging diagram of a known two-step random channel access (RACH) procedure;
Fig. 5 is a messaging diagram of a known scenario in which a UE transitions from an inactive state to the connected state to transmit data to the RAN;
Fig. 6A is a messaging diagram of an example scenario in which a UE operating in the inactive state applies a security function to data and transmits a secured packet to the RAN;
Fig. 6B is a messaging diagram of an example scenario in which a UE operating in the inactive state fails to transmit a secured packet and retransmits the secured packet during another random access procedure;
Fig. 6C is a messaging diagram of an example scenario in which a UE operating in the inactive state fails to transmit a secured packet and, in response, resumes the radio connection;
Fig. 6D is a messaging diagram of an example scenario in which a UE operating in the inactive state fails to transmit a secured packet and, in response, sets up a new radio connection;
Fig. 7 is a messaging diagram of an example scenario in which a base station receives a secured packet from a UE operating in the inactive state, obtains security information from another base station, and retrieves the data from the secured packet using the security information;
Fig. 8A is a messaging diagram of an example scenario in which a base station receives a secured packet from a UE operating in the inactive state, obtains security information from another base station, and retrieves the data from the secured packet using the security information;
Fig. 8B is a messaging diagram of an example scenario in which a base station receives a secured packet from a UE operating in the inactive state, forwards the secured packet to another base station, and receives a secured command from the other base station, for forwarding to the UE;
Fig. 8C is a messaging diagram of an example scenario in which a base station receives a secured packet from a UE operating in the inactive state, forwards the secured packet to another base station, and generates a secured command for the UE using security information received from the other base station;
Fig. 8D is a messaging diagram of an example scenario in which a base station receives a secured packet from a UE operating in the inactive state, fails to retrieve the UE context from the other base station, and sets up a new radio connection with the UE;
Fig. 9 is a flow diagram of an example method in a UE for determining whether data can be transmitted in an inactive state of the protocol for controlling radio resources, based on whether the data is associated with an IP Multimedia Subsystem (IMS);
Fig. 10 is a flow diagram of an example method in a UE for determining whether data can be transmitted in an inactive state of the protocol for controlling radio resources, based the whether the data is associated with a control plane;
Fig. 11 is a flow diagram of an example method in a UE for determining whether data can be transmitted in an inactive state of the protocol for controlling radio resources, based on whether the data is associated with IMS or the control plane;
Fig. 12 is a flow diagram of an example method of Fig. 11, where the UE further determines the amount of the data;
Fig. 13 is a flow diagram of an example method in a UE for determining whether data can be transmitted in an inactive state of the protocol for controlling radio resources, based on whether the data requires a response from the RAN;
Fig. 14 is a flow diagram of an example method in a UE for determining whether data can be transmitted in an inactive state of the protocol for controlling radio resources, based on whether there is a permission to transmit this data in the inactive state;
Fig. 15 is a flow diagram of an example method in a base station for configuring a UE to transmit a certain kind of data in an inactive state of the protocol for controlling radio resources;
Fig. 16 is a flow diagram of an example method for communicating data in an inactive state associated with a protocol for controlling radio resources, which can be implemented in the UE of Fig. 1A; and
Fig. 17 is a flow diagram of an example method for processing a secured packet received from a UE operating in an inactive state associated with a protocol for controlling radio resources, which can be implemented in the base station of Fig. 1A.

### DETAILED DESCRIPTION OF THE DRAWINGS

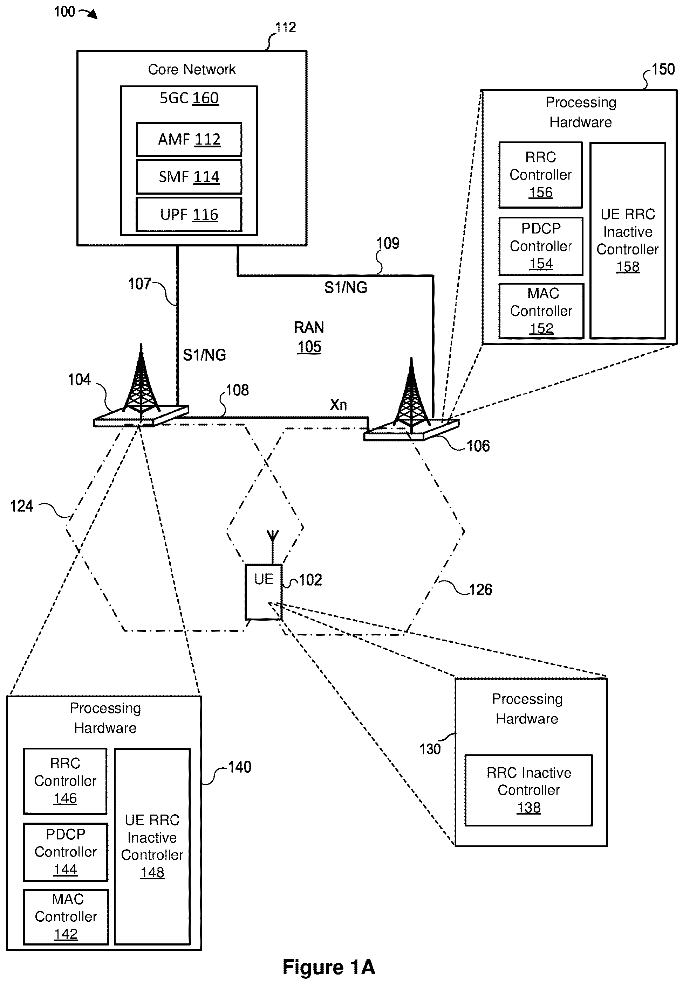

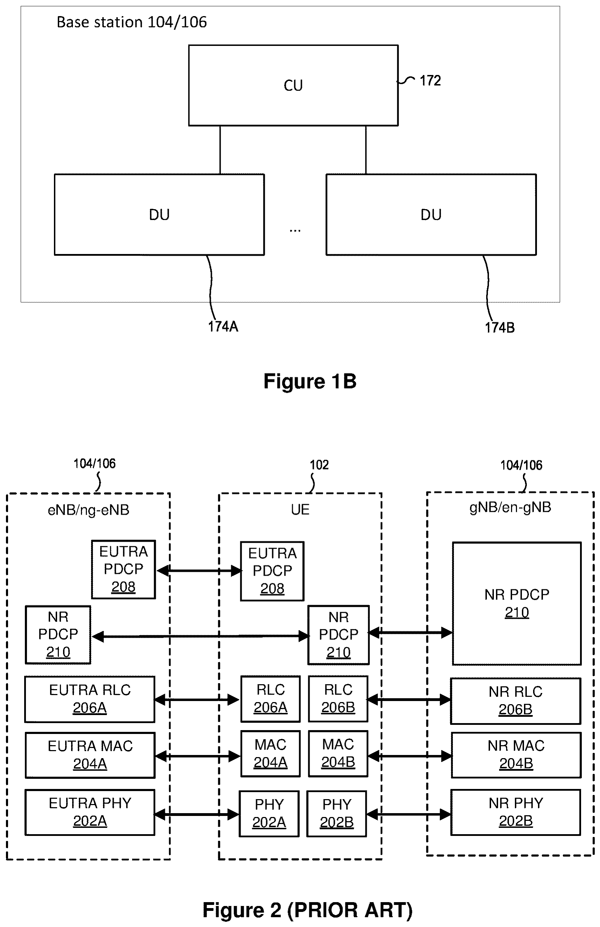

Fig. 1 illustrates an example wireless communication network 100 in which a UE 102 communicates with a RAN 105 that includes a first base station 104 and a second base station 106. Each of the base stations 104 and 106 can be implemented as a 5G NR base station (gNB) or a next-generation evolved Node B (ng-eNB). The base stations 104 and 106 can be connected to a 5G core network (5GC) 110 via interfaces 107 and 109, which can be NG or N2 interfaces. The 5GC includes an Access and Mobility Management (AMF) 112, a Session Management Function (SMF) 114 and a User Plane Function (UPF) 116.

As discussed in detail below, the UE 102 and/or the RAN 105 of this disclosure reduces latency in uplink transmission of data when the radio connection between the UE 102 and the RAN 105 is suspended, e.g., in the inactive state of the protocol for controlling radio resources between the UE 102 and the RAN 105. For clarity, the examples below refer to the RRC_INACTIVE state of the RRC protocol.

As used in this disclosure, the term "data" refers to non-signaling, non-control-plane information at protocol layers above the layer of the protocol for controlling radio resources (e.g., RRC), above the layer of the protocol for controlling mobility management (MM), above the layer of the protocol for controlling session management (SM), or above the layer of the protocol for controlling quality of service (QoS) flows (e.g., service data adaptation protocol (SDAP)). The data to which the UE and/or the RAN applies the techniques of this disclosure can include for example Internet of things (IoT) data, Ethernet traffic data, Internet traffic data, or a short message service (SMS) message. Further, as discussed below, the UE 102 in some implementations applies these techniques only if the size of the data is below a certain threshold value.

In the example scenarios discussed below, the UE 102 transitions to the RRC_INACTIVE state when the RRC connection is between the UE 102 and the first base station 104, then selects a cell of the second base station 106, and exchanges data with the base station 104 via the base station 106 without transitioning to RRC_CONNECTED state. As a more specific example, after the UE 102 determines that data is available for uplink transmission in the RRC_INACTIVE state, the UE 102 can apply one or more security functions to the data, generate a first UL protocol data unit (PDU) including the securely protected data, include a UE identity/identifier (ID) of the UE 102 such as Inactive Radio Network Temporary Identifier (I-RNTI) along with the first UL PDU in a second UL PDU, and transmit the second UL PDU to the RAN 105.

The security function can include an integrity protection and/or encryption function. When integrity protection is enabled, the UE 102 can generate a message authentication code for integrity (MAC-I) to protect integrity of the data. Thus, the UE 102 in this case generates a secured packet including the data and the MAC-I. When encryption is enabled, the UE 102 can encrypt the data to obtain an encrypted packet, so that the secured packet includes encrypted data. When both integrity protection and encryption are enabled, the UE 102 can generate a MAC-I for protecting integrity of the data and encrypt the data along with the MAC-I to generate an encrypted packet and an encrypted MAC-I. The UE 102 then can transmit the secured packet to the RAN 105, while in the RRC_INACTIVE state.

In some implementations, the data is an uplink (UL) protocol data unit (PDU) of the convergence protocol (PDCP). The UE 102 applies the security function to the PDCP PDU and includes the secured packet in another UL PDU (a second UL PDU), which can be associated with the medium access control (MAC) layer. Thus, the UE 102 in these cases transmits the (first) secured PDCP UL PDU in a (second) MAC UL PDU. More generally, the UE 102 can secure the data using at least one of encryption and integrity protection, include the secured data as a secured packet in the first UL PDU, and transmit the first UL PDU to the RAN 105 in the second UL PDU.

The base station 106 can retrieve the identity of the UE 102 from the second UL PDU and identify the base station 104 as the destination of the data in the first UL PDU, based to the determined identity. In one example implementation, the base station 106 retrieves the first UL PDU from the second UL PDU and transmits the first UL PDU to the base station 104. The base station 104 then retrieves the secured packet from the first PDU, applies one or two security functions to decrypt the data and/or check the integrity protection, and transmits the data to the CN 112, e.g., to the UPF 116.

In another implementation, the base station 106 retrieves the secured packet from the first UL PDU and transmits the secured packet to the base station 104. The base station 104 retrieves the data from the secured packet and transmits the data to the data server such as the UPF 116 or an edge server. When the secured packet is an encrypted packet, the base station 104 decrypts the encrypted packet to obtain the data. If the secured packet is an integrity-protected packet, the integrity protected packet may include the data and the MAC-I. The base station 104 can verify whether the MAC-I is valid for the secured packet. When the base station 104 confirms that the MAC-I is valid, the base station 104 retrieves the data. On the other hand, when the base station 104 determines the MAC-I is invalid, the base station 104 discards the secured packet. Further, if the secured packet is both encrypted and integrity-protected, the encrypted and integrity-protected packet may include the encrypted packet along with the encrypted MAC-I. The base station 104 in this case decrypts the encrypted packet and the encrypted MAC-I to obtain the data and the MAC-I. The base station 104 then determines whether the MAC-I is valid for the data. If the base station 104 determines that the MAC-I is valid, the base station 104 retrieves the data and forwards the data to the data CN 112. However, if the base station 104 determines that the MAC-I is invalid, the base station 104 discards the packet.

Further, the RAN 105 in some cases transmits data in the downlink (DL) direction to the UE 102 operating in the RRC_INACTIVE state.

For example, when the base station 104 determines that data is available for downlink transmission to the UE 102 currently operating in the RRC_INACTIVE state, the base station 104 can apply at least one security function to the data to generate a secured packet, generate a first DL PDU including the secured packet, and include a UE identity/identifier (ID) of the UE (e.g., I-RNTI or a contention resolution ID) and the first DL PDU in a second DL PDU. To secure the data, the base station 104 can apply integrity protection and/or encryption to the data. More particularly, when integrity protection is enabled, the base station 104 generates a MAC-I for protecting integrity of the data, so that secured packet includes the data and the MAC-I. When encryption is enabled, the base station 104 encrypts the data to generate an encrypted packet, so that secured packet is an encrypted packet. Further, when both integrity protection and encryption are enabled, the base station 104 can generate a MAC-I for protecting integrity of the data and encrypt the data along with the MAC-I to generate an encrypted packet and an encrypted MAC-I. The base station 104 in some implementations generates a first DL PDU, such as a PDCP PDU, using the secured packet, includes the first DL PDU in a second DL PDU associated with the MAC layer for example, and transmits the second DL PDU to the UE 102 without first causing the UE 102 to transition from the RRC_INACTIVE state to the RRC_CONNECTED state.

In another implementation, the base station 104 transmits the second DL PDU to the base station 106, which then transmits the second DL PDU to the UE 102 without first causing the UE 102 to transition from the RRC_INACTIVE state to the RRC_CONNECTED state.

The UE 102 operating in the RRC_INACTIVE state can determine the identity of the UE 102 based on the second DL PDU and confirms that the first DL PDU and/or the second DL PDU is addressed to the UE according to the UE identity 102. The UE 102 then can retrieve the data from the secured packet. If the secured packet is an encrypted packet, the UE 102 can decrypt the encrypted packet using the appropriate decryption function and the security key to obtain the data. If the secured packet is the integrity-protected packet including the data and the MAC-I, the UE 102 can determine whether the MAC-I is valid. If the UE 102 confirms that the MAC-1 is valid, the UE 102 retrieves the data. If, however, the UE 102 determines that the MAC-I is invalid, the UE 102 discards the packet. Finally, when the secured packet is both encrypted and integrity-protected, with encrypted data and an encrypted MAC-I, the UE 102 can decrypt the encrypted packet and encrypted MAC-I to obtain the data and the MAC-I. The UE 102 then can verify that the MAC-I is valid for the data. If the UE 102 confirms that the MAC-I is valid, the UE 102 retrieves and processes the data. Otherwise, when the UE 102 determines that the MAC-I is invalid, the UE 102 discards the data.

With continued reference to Fig. 1, the base station 104 covers a cell 124, and the base station 106 covers a cell 126. If the base station 104 is a gNB, the cell 124 is an NR cell. If the base station 124 is an ng-eNB, the cell 124 is an evolved universal terrestrial radio access (E-UTRA) cell. Similarly, if the base station 106 is a gNB, the cell 126 is an NR cell, and if the base station 126 is an ng-eNB, the cell 126 is an E-UTRA cell. The cells 124 and 126 can be in the same Radio Access Network Notification Areas (RNA) or different RNAs. In general, the RAN 105 can include any number of base stations, and each of the base stations can cover one, two, three, or any other suitable number of cells. The UE 102 can support at least a 5G NR (or simply, "NR") or E-UTRA air interface to communicate with the base stations 104 and 106. The base stations 104 and 106 also can be interconnected via an interface 108, which can be an Xn interface for interconnecting NG RAN nodes.

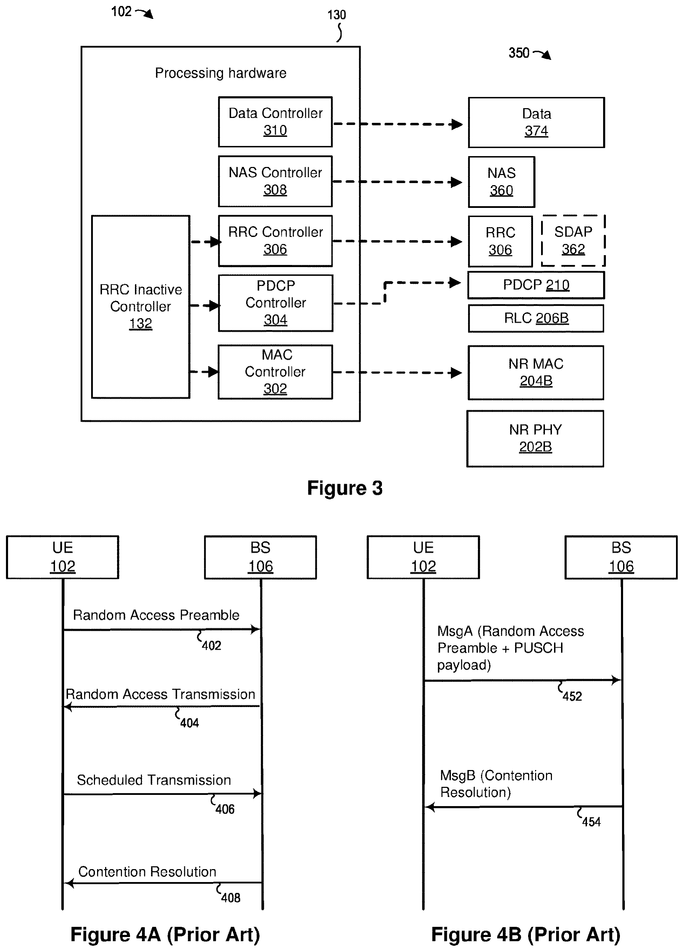

The UE 102 is equipped with processing hardware 130 that can include one or more general-purpose processors such as CPUs and non-transitory computer-readable memory storing machine-readable instructions executable on the one or more general-purpose processors, and/or special-purpose processing units. The processing hardware 130 in an example implementation includes an RRC inactive controller configured to manage uplink and/or downlink communications when the UE 102 operates in the RRC_INACTIVE state. An example implementation of the UE 102 is discussed further below with reference to Fig. 3.

The base station 104 is equipped with processing hardware 140 that can include one or more general-purpose processors (e.g., CPUs) and a non-transitory computer-readable memory storing instructions that the one or more general-purpose processors execute. Additionally or alternatively, the processing hardware 140 can include special-purpose processing units. The processing hardware 140 in an example implementation includes a Medium Access Control (MAC) controller 142 configured to perform a random access procedure with one or more user devices, receive uplink MAC protocol data units (PDUs) to one or more user devices, and transmit downlink MAC PDUs to one or more user devices. The processing hardware 140 can also include a Packet Data Convergence Protocol (PDCP) controller 144 configured to transmit PDCP PDUs in accordance with which the base station 104 can transmit data in the downlink direction, in some scenarios, and receive PDCP PDUs in accordance with which the base station 104 can receive data in the uplink direction, in other scenarios. The processing hardware further can include an RRC controller 146 to implement procedures and messaging at the RRC sublayer of the protocol communication stack. The base station 106 can include generally similar components. In particular, components 152, 154, 156, and 158 can be similar to the components 142, 144, 146, and 158, respectively.

Fig. 1B depicts an example distributed implementation of a base station such as the base station 104 or 106. The base station in this implementation can include a centralized unit (CU) 172 and one or more distributed units (DUs) 174A, 174B. The CU 172 is equipped with processing hardware that can include one or more general-purpose processors such as CPUs and non-transitory computer-readable memory storing machine-readable instructions executable on the one or more general-purpose processors, and/or special-purpose processing units. The processing hardware in an example implementation includes an RRC controller 146/156 configured to manage or control one or more RRC configurations and/or RRC procedures and/or an PDCP controller 144/154.

Each of the DUs 174A and 174B is also equipped with processing hardware that can include one or more general-purpose processors such as CPUs and non-transitory computer-readable memory storing machine-readable instructions executable on the one or more general-purpose processors, and/or special-purpose processing units. In some examples, the processing hardware in an example implementation includes a MAC controller 142/152 configured to manage or control one or more MAC operations or procedures (e.g., a random access procedure) and an RLC controller configured to manage or control one or more RLC operations or procedures. The process hardware may include further a physical layer controller configured to manage or control one or more physical layer operations or procedures.

Fig. 2 illustrates, in a simplified manner, an example radio protocol stack 200 according to which the UE 102 may communicate with an eNB/ng-eNB or a gNB *(e.g.,* one or more of the base stations 104A, 104B, 106A, 106B). In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP sublayer 210 over the EUTRA RLC sublayer 206A.

The EUTRA PDCP sublayer 208 and the NR PDCP sublayer 210 receive packets (*e.g.,* from an Internet Protocol (IP) layer, layered directly or indirectly over the PDCP layer 208 or 210) that can be referred to as service data units (SDUs), and output packets (*e.g.,* to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages, for example. On a user plane, the EUTRA PDCP sublayer 208 and the NR PDCP sublayer 210 can provide DRBs to support data exchange.

Next, Fig. 3 illustrates several components that can interact with the RRC inactive controller 132 (see Fig. 1A), according to an example implementation of the UE 102. The processing hardware 130 including one or more general-purpose processors (e.g., CPUs) and a non-transitory computer-readable memory storing instructions that the one or more general-purpose processors execute. Additionally or alternatively, the processing hardware 130 can include special-purpose processing units.

The processing hardware 130 can include a MAC controller 302, a PDCP controller 304, an RRC controller 306, a NAS controller 308, and a data controller 310. Each of the controllers 302-310 is responsible for receiving PDUs, transmitting PDUs, and internal procedures at the corresponding layer of a protocol stack 350, and each of these controllers can be implemented using any suitable combination of hardware, software, and firmware. In one example implementation, the controllers 302-310 are sets of instructions that define respective components of the operating system of the UE 102, and one or more CPUs execute these instructions to perform the corresponding functions. In another implementation, some or all of the controllers 302-310 are implemented using firmware as a part of the wireless communication chipset. In a further implementation, the controllers 302-310 define respective components of the operating system of the UE 102, and one or more CPUs execute these instructions to perform the corresponding functions.

In addition to the layers discussed above with reference to Fig. 2, the UE 102 can support an RRC sublayer 360, a service data adaptation protocol (SDAP) sublayer 362 (optionally), a non-access stratum (NAS) sublayers 370, and a data layer 374. These layers can be ordered as illustrated in Fig. 3. The SDAP sublayer 362 can be optional. The NAS sublayers 370 can include a mobility management (MM) sublayer for exchanging messages related to registration/attachment and location updates, for example, and a session management (SM) sublayer for exchanging messages related to PDU session establishment, PDU session modification, PDU session authentication and PDU session release, for example. The MM sublayer can correspond to a 5G MM (5GMM) sublayer for 5th generation system (5GS) NAS procedures. The data layer 374 can support higher-layer protocols, including for example Ethernet protocol, IP, TCP/IP and UDP/IP protocols for communicating downlink and uplink data. The data layer 374 can exchange data directly over the RRC sublayer 360 or indirectly over RRC sublayer 360 via the NAS sublayer 370. The controllers 302-310 generate outbound messages and process inbound messages for the corresponding layers or sublayers, as schematically illustrated in Fig. 3. The controllers 302-310 also carry out procedures internal to the UE 102. The data controller 310 can transmit and receive packets over Ethernet protocol, IP, TCP/IP, UDP/IP, HTTP/TCP, etc.

Now referring to Figs. 4A and 4B, the UE 102 and the base station 104 or 106 can synchronize communication over a radio interface in a licensed or unlicensed portion of the radio spectrum using a random access channel (RACH) procedure, for example. Figs. 4A and 4B illustrate a two-step procedure and a four-step procedure, respectively.

During the four-step procedure , the UE 102 transmits 402 a random access (RA) preamble, which also can be referred to as "Msg1," to the base station 106 (step 1); the base station 106 transmits 404 a random access response (RAR), or "Msg2," to the UE 102 (step 2); the UE 102 transmits 406 a scheduled transmission, or "Msg3," to the base station 106 (step 3); and the base station106 transmits 408 a contention resolution, or "Msg4," to the UE 102 (step 4). During the two-step procedure, the UE 102 transmits 452 a random access preamble and a physical uplink shared channel (PUSCH) payload, or "MsgA," to the base station (step 1), and the base station 106 transmits 454 a contention resolution, or "MsgB," to the UE 102. The UE 102 and the base station 106 can implement these procedures as described in 3GPP document R2-1915889.

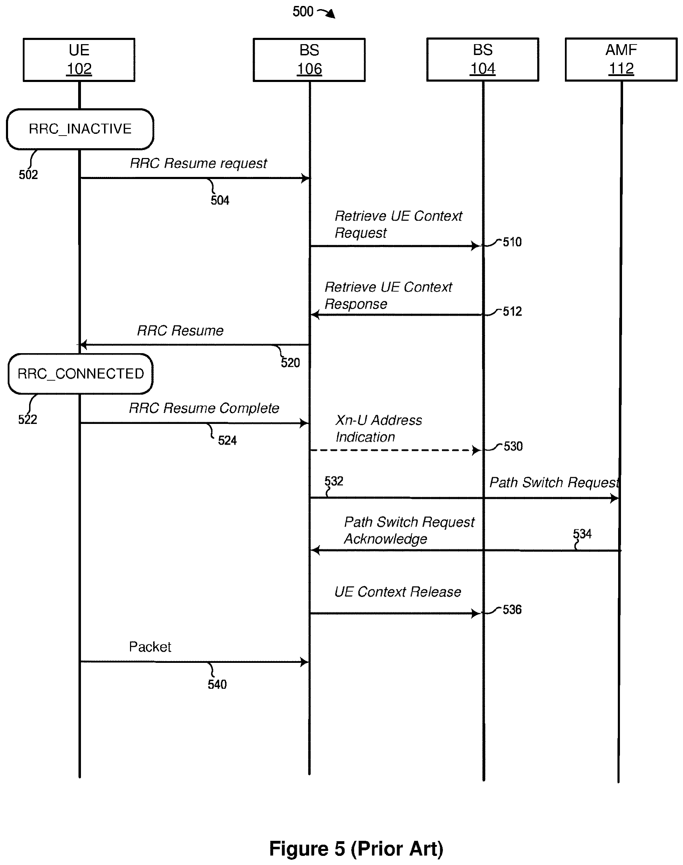

Next, Fig. 5 illustrates a known scenario in which the UE 102 transitions from the RRC_INACTIVE state to the RRC_CONNECTED state to transmit data in the uplink direction to the RAN 105. The UE 102 in this scenario initially operates 502 in the RRC_INACTIVE state, after the base station 104 suspended an RRC connection between the UE 102 and the base station 104. When the UE 102 has data to transmit to the RAN 105, the UE 102 selects a cell of the base station 106 and transmits 504 an *RRC resume request* message to the base station 106.

The UE 102 includes, in the *RRC resume request* message, the *I-RNTI* value UE 102 received from the base station 104 before transmitting 504 the *RRC resume request* message. In response to the *RRC resume request* message, the base station 106 transmits 510 *a Retrieve UE Context Request* message to request the base station 104 to provide a UE Inactive Context. The base station 104 responds 512 to the base station 106 with a *Retrieve UE Context Response* message including a UE Inactive Context of the UE 102. The base station 106 then transmits 520 an *RRC resume* message, responsive to the *RRC resume request* message of event 504. The UE 102 transitions 522 to the RRC_CONNECTED state and transmit 524 an *RRC resume complete* message to the base station 106.

In some implementations, the base station 106 transmits 530 an *Xn-U Address Indication* message, including forwarding addresses, to the base station 104. The base station 106 also transmits 532 a *Path Switch Request* message to the AMF 112, which in response transmits 534 a *Path Switch Request Acknowledge* message to the base station 106. The base station 106 then transmits 536 a *UE Context Release* message to the base station 104. The base station 104 in response releases the UE Inactive Context of the UE 102. Finally, the UE 102 transmits 540 a packet (e.g., IP packet, Ethernet packet or Application packet) to the base station 106. If the base station 106 then detects data inactivity during a certain period of time between the UE 102 and the RAN 105, the base station 106 can transmit an *RRC inactive* message to the UE 102. In response to the *RRC inactive* message, the UE 102 then can transition from the RRC_CONNECTED state to the RRC_INACTIVE state.

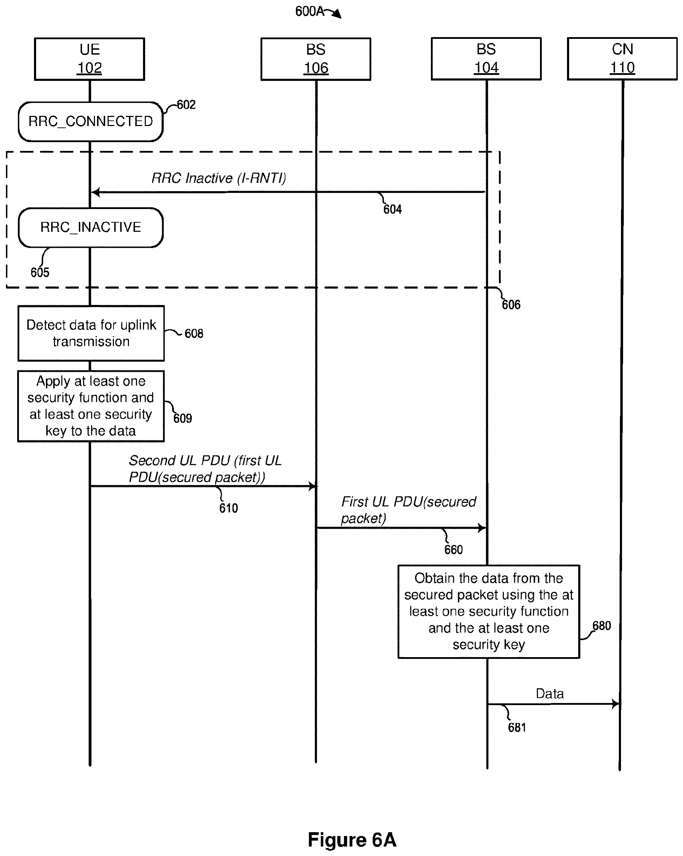

Next, several example scenarios that involve several components of Figs. 1A, 1B, and 3 and relate to transmitting and/or receiving data in RRC_INACTIVE state are discussed next with reference to Figs. 6A-14.

Referring first to Fig. 6A, the UE 102 initially operates 602 in the cell 124 of the base station 104, in the RRC_CONNECTED state. In this state, the UE 102 can transmit data as well as signaling information in the uplink direction to the base station, and receive data as well as signaling information in the downlink direction from the base station 104.

After a certain period of data inactivity, the base station 104 can determine that neither the base station 104 nor the UE 102 has transmitted any data in the downlink direction or the uplink direction, respectively, during the certain period. In response to the determination, the base station 104 (e.g., the RRC controller 146) can transmit 604 an *RRC inactive* message to the UE 102 and instruct the UE 102 to transition to the RRC_INACTIVE state. The UE 102 (e.g., the RRC controller 306) transitions 605 to the RRC_INACTIVE state upon receiving the *RRC inactive* message. The base station 104 can assigns an *I-RNTI* to the UE 102 and include the assigned value in the *RRC inactive* message.

In one implementation, the *RRC Inactive* message is an *RRCRelease* message that includes a *SuspendConfig* IE to indicate that the UE 102 should transition to the RRC_INACTIVE, rather than RRC_IDLE, state upon receiving the *RRC Inactive* message. In another implementation, the *RRC inactive* message is an *RRCConnectionRelease* message that includes an *RRC-InactiveConfig-r15* IE, which similarly causes the UE 102 to transition to the RRC_INACTIVE rather than the RRC_IDLE state. The events 604 and 605 together define an RRC state transition to INACTIVE procedure 606. More generally, the procedure 606 can include any suitable messaging and processing at the UE 102 and/or the RAN 105 that causes the UE 102 to transition from RRC_CONNECTED to RRC_INACTIVE.

At a later time, the UE 102 in the RRC_INACTIVE state selects or selects a cell of base station 106 and detects 608 data available for uplink transmission. The data in some example scenarios is an Internet Protocol (IP) packet, an Ethernet packet or an application packet. In other scenarios, the data is an RRC PDU that includes an IP packet, and Ethernet packet, or an application packet. Still further, the data in some scenarios can be an RRC PDU including a NAS PDU, such that the NAD PDU includes an IP packet, and Ethernet packet, or an application packet.

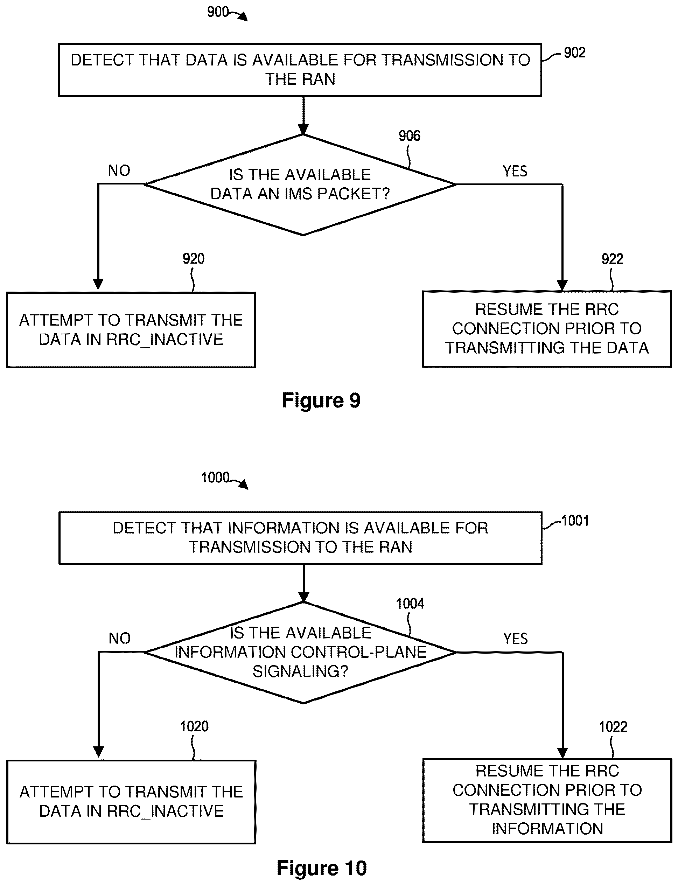

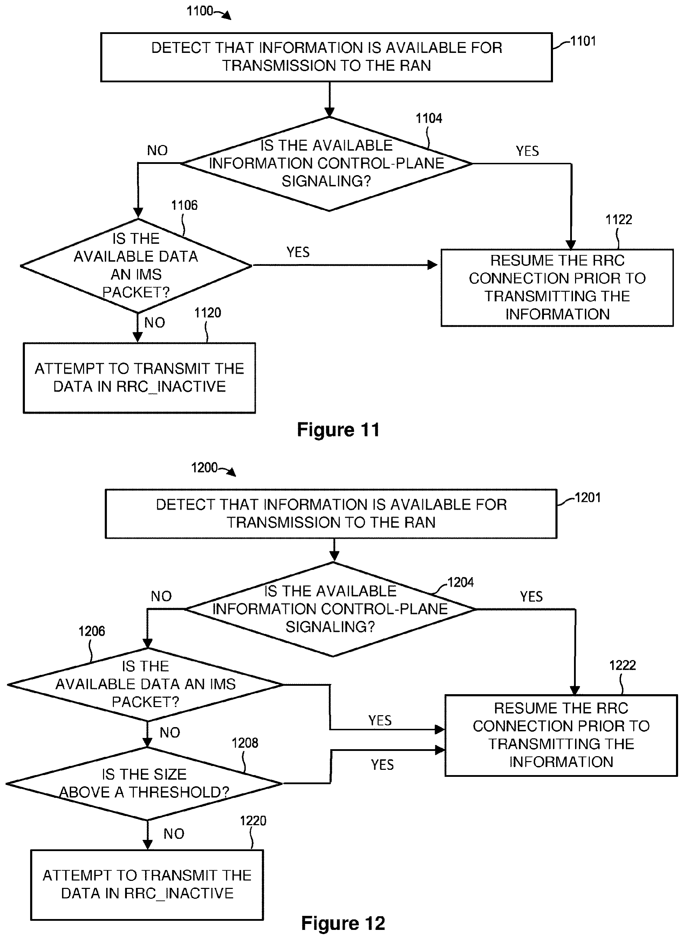

The UE 102 in some implementations can determine at block 608 whether the data qualifies for transmission in the RRC_INACTIVE state in view of one or more of such factors as whether the data is an IMS packet (see Fig. 9), whether the data belongs to the control plane (see Fig. 10), the size of the data (see Fig. 12), etc. When the UE 102 determines that the data does not qualify for transmission in the RRC_INACTIVE state, the UE 102 can utilize the procedure of Fig. 5 for transmitting in the RRC_CONNECTED state.

Next, the UE 102 (e.g., the PDCP controller 304) applies 609 at least one security function to the data to generate a secured packet. The at least one security function can rely on a certain security algorithm and use one or more security keys, as discussed in more detail below. After applying 609 the at least one security function, the UE 102 can include the secured packet in a first UL PDU, include the first UL PDU in a second UL PDU, which may be associated with a lower protocol layer than the first UL PDU, and transmit 610 the second UL PDU to the base station 106. In one example implementation, the PDCP controller 304 includes the secured packet in the first UL PDU, and the MAC controller 302 includes the *I-RNTI* in a MAC PDU (in this case, the second UL PDU). In another implementation, the PDCP controller 304 includes the *I-RNTI* in a PDCP PDU (in this case, the first UL PDU). In yet another implementation, the RRC controller 306 includes the *I-RNTI* in an RRC PDU.

The one or more security keys the UE 102 utilizes can include an encryption key (or called ciphering key) and/or an integrity key, and the one or more security algorithms the UE 102 utilizes can include a ciphering algorithm and/or an integrity protection algorithm. In one implementation, the base station 104 can configure the ciphering algorithm and/or the integrity protection algorithm in the *RRC Inactive* message. In another implementation, the base station 104 can configure the ciphering algorithm and/or the integrity protection algorithm in an RRC message (e.g., a *SecurityModeCommand* or *RRC reconfiguration* message) transmitted to the UE while the UE 102 was in the RRC_CONNECTED 602. Accordingly, to apply 609 a security function to the data, the UE 102 can encrypt the data using the encryption key and the ciphering algorithm, and/or perform integrity protection on the data packet by using the integrity key and the integrity protection algorithm.

More particularly, when encryption is enabled and integrity protection is not enabled for the UE 102, the UE 102 encrypts 609 the data to generate encrypted data using the encryption key and the ciphering algorithm. The secured packet in this case includes encrypted data. When encryption is not enabled but integrity protection is enabled for the UE 102, the UE 102 generates 609 a MAC-I for the data using the integrity key and the integrity algorithm. The secured packet in this case includes the data and the MAC-I. Further, when both integrity protection and encryption are enabled for the UE 102, the UE 102 generates 609 a MAC-I for the data using the integrity key and the integrity protection algorithm, and also encrypts 609 the data along with the MAC-I to generate encrypted data and an encrypted MAC-I using the encryption key and the ciphering algorithm. The secured packet in this case includes encrypted data and the encrypted MAC-I, and thus is both encrypted and integrity-protected.

In some implementations, the UE 102 also uses one or more parameters as an input to the at least one security function 609 when applying 609 one or more security functions to the data. These parameters can include a first radio bearer (RB) identity, a COUNT value associated with the data (when the data is a packet associated with a protocol that associates packets with respective counter), and/or a DIRECTION bit (e.g. 0) to indicate whether the data is traveling in the uplink direction (to the RAN 105) or in the downlink direction (from the RAN 105). In some implementations, these parameters can include the *I-RNTI.* In one implementation, the UE 102 can use the *I-RNTI* in either the integrity protection function or the encryption function, or both the integrity protection function and the encryption function.

With continued reference to Fig. 6A, the MAC controller 302 or another suitable component of the UE 102 transmits 610 the second UL PDU to the MAC controller 152 or another suitable component of the base station 106. When the second UL PDU includes the *I-RNTI*, the base station 106 can retrieve the *I-RNTI* from the second UL PDU. In other scenarios, when the first UL PDU includes the *I-RNTI,* the base station 106 can retrieve the *I-RNTI* from the first UL PDU. As more specific examples, when the first UL PDU is a PDCP PDU, the PDCP controller 154 can retrieve the *I-RNTI* from the PDCP PDU; when the first UL PDU is an RRC PDU, the RRC controller 156 can retrieve the *I-RNTI* from the RRC PDU. In any case, the base station 106 can identifies the base station 104 according the *I-RNTI.* For example, the *I-RNTI* can contain a base station identity of the base station 104.

In one implementation, the base station 106 then transmits 660 the first UL PDU to the base station 104. The first UL PDU in this example implementation includes the secured packet. The base station 106 also can transmit the *I-RNTI* to the base station 104, so that the base station 104 can identify the UE 102 or a UE Inactive Context of the UE 102 according to the *I-RNTI.* In some implementations, the base station 106 transmits an interface message including the first UL PDU and the *I-RNTI* to the base station 104. In other implementations, the base station 106 transmits a General Packet Radio System (GPRS) Tunneling Protocol User Plane (GTP-U) PDU including the first UL PDU and the *I-RNTI* to the base station 104. In yet other implementations, the base station 106 transmits an interface message including the *I-RNTI* to the base station 104 and transmits a GTP-U PDU with the first UL PDU to the base station 104. The interface message can be for example a *Retrieve UE Context Request* message. In other implementations, the interface message can be a Xn or X2 message other than the *Retrieve UE Context Request* message.

In some implementations, the UE 102 can include a MAC-I in the second UL PDU rather than in the first UL PDU. The UE 102 can generate the MAC-I to protect the integrity of the first UL PDU, the secured packet, or the original data, using the integrity protection algorithm and the corresponding key. In one implementation, the second UL PDU is a UL MAC PDU, and the MAC-I is in the MAC Control Element (CE) of the UL MAC PDU. The base station 104 can confirm that the MAC-I for the first UL PDU, the secured packet, or the data. If the base station 104 confirms that the MAC-I is valid, the base station 104 retrieves 680 and transmits 681 data to the CN 110 (e.g., the AMF 112 or the UPF 116) or, alternatively, to an edge server (not shown in the figures). However, if the base station 104 determines that the MAC-I is invalid, the base station 104 discards the first UL PDU, the secured packet, or the data.

More specifically, the PDCP controller 144 or another suitable component of the base station 104 can retrieve 680 the secured packet from the first UL PDU and obtain the data from the secured packet. To this end, the base station can apply an inverse of the security function the UE 102 used 609 to generate the secured packet, as discussed below. In an alternative implementation, the base station 106 retrieves the secured packet from the first PDCP PDU, transmits the secured packet to the base station 104 without also transmitting the first PDCP PDU, and the base station 104 then similarly retrieves 680 the data from the secured packet.

After the base station 104 retrieves 680 the data, the base station 104 transmits 681 the data to the CN 110 (e.g., the AMF 112 or the UPF 116) or, alternatively, to an edge server (not shown in the figures). In some implementations, the edge server can operate within the RAN 105. The security functions and the keys the devices use at events 609 and 680 may be the same or be related as inverse functions or values, for example.

In some implementations, the UE 102 (e.g., the MAC controller 302) includes the first UL PDU in another, third UL PDU when transmitting 610 the data to the base station 106. In one such implementation, the third UL PDU is an RLC acknowledged mode data PDU. In another implementation, the third UL PDU is an RLC unacknowledged mode data PDU. In yet another implementation, the third UL PDU is an RRC PDU. The MAC controller 302 can include a MAC subheader in the second UL PDU, such that the MAC subheader is associated with the third UL PDU. To identify the third UL PDU, the MAC controller 302 of the UE 102 can include a first logical channel identity (LCID) associated with a first radio bearer (RB) in the MAC subheader. The base station 106 then can identify and retrieve the third UL PDU according to the MAC subheader and/or the first LCID. In other implementations, the UE 102 includes the first UL PDU directly in the second UL PDU. More particularly, the UE 102 can include a MAC subheader in the second UL PDU, such that the MAC subheader is associated with the first UL PDU. The UE 102 can include the first LCID of the first RB in the MAC subheader to identify the first UL PDU. The base station 106 then can identify and retrieve the first UL PDU according to the MAC subheader and/or the first LCID.

In the examples above, the first UL PDU or the data in the secured packet can be associated with a first RB, first quality of service (QoS) flow, or first PDU session. In some implementations, the UE 102 receives a message configuring a first RB, the first QoS flow, or first PDU session before event 608. The message can be an RRC message or a NAS message, for example. The UE 102 can receive this message from the base station 104, another base station, the AMF 112 or the SMF 114. The message can arrive when the UE 102 is in the RRC_CONNECTED state 602, or prior to the UE 102 entering the RRC_CONNECTED state 602. In one implementation, the base station 104 includes a first RB configuration for the first RB in the message. The first RB configuration can include or configure a first RB identity of the first RB. In another implementation, the first RB identity is a predefined RB identity (e.g., as a default value) specified in the corresponding standard. Further, in one implementation, the RRC message can also include the first LCID. In another implementation, the first LCID also is a predefined or default LCID specified in the corresponding standard.

The base station 104 can configure data transmission in the RRC_INACTIVE state for a specific RB, QoS flow or PDU session of the UE 102. In some implementations, the base station 104 can indicate in the first RB configuration that the UE 102 in the RRC_INACTIVE state can transmit data associated to the first RB without transitioning to the RRC_CONNECTED state. In other implementations, the base station 104 can indicate in the *RRC Inactive* message that the UE 102 in the RRC_INACTIVE state can transmit data associated to the first RB without transitioning to the RRC_CONNECTED state. In yet other implementations, the base station 104 can transmit an RRC message (e.g., RRC reconfiguration message) to the UE 102, while the UE 102 is in the RRC_CONNECTED state 602, which indicates that the UE 102 in the RRC_INACTIVE state can transmit data associated to the first RB without transitioning to the RRC_CONNECTED state.

In some implementations, the base station 104 can receive a message from the CN 110 (e.g., the AMF 112, SMF 114 or the UPF 116), which indicates QoS parameters of the first QoS flow or the first PDU session where the first DRB is associated. The message can be a N2 message, a next generation application protocol (NGAP) message, a GTP-U packet and the indication can be a 5G QoS indicator. In response to/according to/based on the indication in the message from the CN 110, the base station 104 indicates to the UE 102 that the UE 102 in the RRC_INACTIVE state can transmit data associated to the first RB without transitioning to the RRC_CONNECTED state. In other implementations, the base station 104 can receive a message from the CN 110, which indicates the data transmission in RRC_INACTIVE can be applied to the first QoS flow or the first PDU session where the first DRB is associated. The message can be a N2 message, a NGAP message or a GTP-U packet. In response to/according to/based on the indication in the message from the CN 110, the base station 104 indicates to the UE 102 that the UE 102 in the RRC_INACTIVE state can transmit data associated to the first RB without transitioning to the RRC_CONNECTED state.

In one scenario and implementation, the UE 102 can be configured with a second RB, second QoS flow, or second PDU session before entering the RRC_INACTIVE state. In some implementations, the UE 102 receives a (second) message configuring a second RB, the second QoS flow, or second PDU session before event 608, which can be the same as or different from the message configuring the first RB, the first QoS flow, or first PDU session. The second message can be an RRC message or a NAS message, for example. The UE 102 can receive this second message from the base station 104, another base station, the AMF 112 or the SMF 114. The second message can arrive when the UE 102 is in the RRC_CONNECTED state 602, or prior to the UE 102 entering the RRC_CONNECTED state 602. In one implementation, the base station 104 includes a second RB configuration for the second RB in the second message. The second RB configuration can include or configure a second RB identity of the second RB. In another implementation, the second RB identity is a predefined RB identity (e.g., as a default value) specified in the corresponding standard. Further, in one implementation, the RRC message can also include the second LCID. In another implementation, the second LCID also is a predefined or default LCID specified in the corresponding standard.

In some implementations, the base station 104 may indicate in the second RB configuration that the UE 102 in the RRC_INACTIVE state is not allowed to transmit data associated to the second RB without transitioning to the RRC_CONNECTED state. In other implementations, the base station 104 may indicate in the *RRC Inactive* message that the UE 102 in the RRC_INACTIVE state is not allowed to transmit data associated to the second RB without transitioning to the RRC_CONNECTED state. In yet other implementations, the base station 104 may not transmit an RRC message (e.g., RRC reconfiguration message) to the UE 102, while the UE 102 is in the RRC_CONNECTED state 602, which indicates that the UE 102 in the RRC_INACTIVE state can transmit data associated to the second RB without transitioning to the RRC_CONNECTED state. Given the UE 102 does not receive an RRC message indicating that the UE 102 in the RRC_INACTIVE state can transmit data associated to the second RB without transitioning to the RRC_CONNECTED state, the UE 102 in the RRC_INACTIVE state is not allowed to transmit data associated to the second RB without transitioning to the RRC_CONNECTED state. In this case, the UE 102 firstly transitions to the RRC_CONNECTED state by performing an RRC resume procedure with the base station 106 and then transmit data associated to the second RB to the base station 106.

In some implementations, the base station 104 can receive a message from the CN 110 (e.g., the AMF 112, SMF 114 or the UPF 116), which indicates QoS parameters of the second QoS flow or the second PDU session where the second DRB is associated. The message can be a N2 message, a next generation application protocol (NGAP) message, a GTP-U packet and the indication can be a 5G QoS indicator. In response to/according to/based on the indication in the message from the CN 110, the base station 104 may indicate to the UE 102 that the UE 102 in the RRC_INACTIVE state is not allowed to transmit data associated to the second RB without transitioning to the RRC_CONNECTED state. In other implementations, the base station 104 can receive a message from the CN 110, which does not indicate the data transmission in RRC_INACTIVE can be applied to the first QoS flow or the first PDU session where the first DRB is associated. The message can be a N2 message, a NGAP message or a GTP-U packet. In response to/according to/based on the message from the CN 110, the base station 104 indicates to the UE 102 that the UE 102 in the RRC_INACTIVE state is now allowed to transmit data associated to the second RB without transitioning to the RRC_CONNECTED state.

In some implementations, the first RB, first QoS flow or first PDU session can be associated to specific services or applications (e.g., messaging service, keep-alive application, etc.) or used for the specific services or applications. In other implementations, the first RB, first QoS flow or first PDU session can be associated to non-IMS services or non-IMS applications or used for the non-IMS services or applications. In yet other implementations, the second RB, second QoS flow or second PDU session can be associated to IMS services(s) or IMS application(s) or used for the IMS services(s) or IMS application(s).

The base station 104 can configure data transmission in the RRC_INACTIVE state for the UE 102 instead of for a specific RB, QoS flow or PDU session of the UE 102. Thus, the UE 102 in the RRC_INACTIVE state can transmit data associated to an RB (e.g., the second RB, QoS flow or PDU session), QoS flow or PDU session without transitioning to the RRC_CONNECTED state, even the base station 104 does not specifically configure data transmission in the RRC_INACTIVE state for the second RB, QoS flow or PDU session of the UE 102.

Regarding the RRC message, when the base station 104 is an ng-eNB, this message can be *RRCConnectionReconfiguration, RRCConnectonResume,* or *RRCConnectionSetup.* When the base station 104 is a gNB, the RRC message can be *RRCReconfiguration, RRCResume, RRCReestablihsment,* or *RRCSetup.* The first RB can be a signaling RB (SRB) or a data RB (DRB). The second RB can be an SRB or a DRB.

In some implementations, the base station 106 transmits the first LCID or the first RB identity for the first UL PDU to the base station 104 at event 680, so that the base station 104 can recognize the first RB with which the data (or the first PDCP PDU) is associated, using the first LCID or the first RB identity. In other implementations, the base station 106 transmits neither the first RB identity nor the first LCID for the first UL PDU to the base station 104 at event 680. In this case, the base station 104 still can recognize the first RB with which the data (or the first UL PDU) is associated, if the first RB is the only RB with which the UE 102 is configured, or if the first RB identity is the predefined or default RB identity specified in the standard.

When encryption is enabled but integrity protection is not enabled for the UE 102, the secured packet is an encrypted data that includes only the secured data. The base station 104 can decrypt the encrypted packet to obtain 680 the data using the encryption key and the ciphering algorithm (e.g., the inverse of the encryption function) the UE 102 used 609 to encrypt the data. When encryption is not enabled but integrity protection is enabled for the UE 102, the secured packet can include the data along with the first MAC-I. The base station 104 can verify the MAC-I for the data using the integrity key and the integrity algorithm. After the base station 104 confirms that the first MAC-I is valid to thereby ascertain that the secured packet has not been tampered with, the base station 104 retrieves 680 the data. However, the base station 104 can discard the secured packet in response to determining that the first MAC-I is invalid, and thus tampered with. Finally, when both encryption and integrity protection are enabled for the UE 102, the secured packet is a packet that is both encrypted and integrity-protected, and includes encrypted data as well as the encrypted MAC-I. The base station 104 can decrypt the secured packet and the encrypted MAC-I to obtain 680 the data and the MAC-I, by using the encryption key and the ciphering algorithm as discussed above. The base station 104 then can verify the MAC-I for the data using the integrity key and integrity algorithm. If the base station 104 confirms that the MAC-I is valid, the base station 104 obtains the data from the secured packet. Otherwise, if the base station 104 determines that the MAC-I is invalid, the base station 104 discards the secured packet because of possible tampering.

In some implementations, the base station 104 also uses one or more parameters to obtain 680 the data from the secured packet, in addition to the one or more security keys and one or more security algorithms. The one or more parameters can include the first RB identity, the COUNT value associated with the data, and/or the DIRECTION bit, as discussed above with reference to event 609. In general, the base station 104 can apply the same set of parameters at event 680 as the UE 102 applied at event 609. In some implementations, these parameters can include the *I-RNTI.* In one implementation, the base station 104 can use the *I-RNTI* in either the integrity protection function or the encryption function, or both the integrity protection function and the encryption function.

Referring generally to PDCP operations and specifically to the PDCP controller 304 of the UE 102, the UE 102 during operation can maintain a set of PDCP parameters such as first TX_NEXT, first RX_NEXT, and/or first RX_DELIV counters for exchanging packets or PDCP SDUs with the base station 104 while the UE 102 operates 602 in the RRC_CONNECTED state. More particularly, the first TX_NEXT counter can be associated with a transmitting PDCP entity in the PDCP controller 304, while the first RX_NEXT and first RX_DELIV counters can be associated with a receiving PDCP entity in the PDCP controller 304. Both the transmitting PDCP entity and the receiving PDCP entity can be associated with a particular RB (*e.g.,* the first RB). Similarly, the base station 104 can maintain a set of counters first TX_NEXT, first RX_NEXT, and/or first RX_DELIV for exchanging the packets with the UE 102, while the UE 102 operates 602 in the RRC_CONNECTED. Also similar to the UE 102, the first TX_NEXT counter can be associated with a transmitting PDCP entity in the PDCP controller 154, while the first RX_NEXT and first RX_DELIV counters can be associated with a receiving PDCP entity in the PDCP controller 154; and both the transmitting PDCP entity and the receiving PDCP entity can be associated with a particular RB (*e.g.,* the first RB).

The UE 102 in different implementations or scenarios can suspend the RB upon transitioning to RRC_INACTIVE or omit the suspension, and operate various counters accordingly.

More specifically, in some implementations, the UE 102 can suspend the first RB in response to transitioning 605 from RRC_CONNECTED to RRC_INACTIVE. For example, the RRC controller 306 can suspend the first RB, and the PDCP controller 304 in response can deliver one or more packets received on the first RB from the base station 104 to the upper layers in the ascending order of the corresponding COUNT values, after performing header or data decompression when headers or data in the packets are compressed (if header compression is configured). Upon initiating transmission of the packet in the RRC_INACTIVE state, the UE 102 resumes the first RB, or resumes the transmitting and receiving PDCP entities associated with the first RB, so that the PDCP controller 304 can set the first COUNT value associated with the data to the TX_NEXT. If the second RB is configured as described above, the UE 102 can suspend the second RB upon transitioning from the RRC_CONNECTED state to the RRC_INACTIVE state, when the second RB is not configured with data transmission in the RRC_INACTIVE state. The UE 102 keeps suspending the second RB upon initiating transmission of the packet associated to the first RB in the RRC_INACTIVE state.

In other implementations, the UE 102 does not suspend the first RB upon transitioning from the RRC_CONNECTED state to the RRC_INACTIVE state, when the UE 102 is configured to transmit uplink data in RRC_INACTIVE state. The UE 102 can deliver one or more packets received on the first RB from the base station 104 to the upper layers in the ascending order of the corresponding COUNT values, after performing header or data decompression when headers or data in the packets are compressed and upon transitioning from the RRC_CONNECTED state to the RRC_INACTIVE state. The UE 102 can suspend the first RB upon transitioning from the RRC_CONNECTED state to the RRC_INACTIVE state when the UE 102 is not configured to transmit uplink data while in the RRC_INACTIVE state. If the second RB is configured as described above, the UE 102 can suspend the first RB upon transitioning from the RRC_CONNECTED state to the RRC_INACTIVE state when the UE 102 is not configured to transmit uplink data while in the RRC_INACTIVE state or the second RB is not configured with data transmission in the RRC_INACTIVE state.

In some implementations, the UE 102 sets the COUNT value to the value of the first TX_NEXT upon initiating transmission of the packet in the RRC_INACTIVE state. The PDCP controller 304 of the UE 102 can set or reset the first TX_NEXT to an initial value such as zero before setting COUNT to the first TX_NEXT. For example, the PDCP controller 304 can set the first TX_NEXT counter to an initial value such as zero upon transitioning from the RRC_CONNECTED state to the RRC_INACTIVE state. After the UE 102 sets the COUNT value to the value of the first TX_NEXT, the UE 102 can increment the value of the first TX_NEXT by one. In other implementations, the UE 102 sets COUNT to a value of another, second TX_NEXT upon initiating transmission of the packet in the RRC_INACTIVE state. The PDCP controller 304 can set the second TX_NEXT to an initial value such as zero before setting the value of COUNT to the second TX_NEXT. For example, the PDCP controller 304 can set the second TX_NEXT to an initial value such as zero upon transitioning to the RRC_INACTIVE state from the RRC_CONNECTED state or upon initiating transmission of the packet in the RRC_INACTIVE state. After the UE 102 sets COUNT to the second TX_NEXT, the UE 102 can increment the second TX_NEXT by one.

In some implementations, the base station 104 can may reset or reset the first RX_NEXT and/or RX_DELIV to initial values such as zero in response to determining that the UE 102 should enter the RRC_INACTIVE state, in response to transmitting the *RRC Inactive* message, before receiving the first UL PDU, or upon receiving the first UL PDU. The base station 104 can use the first RX_NEXT and/or the first RX_DELIV to process the first UL PDU. After processing the first UL PDU, the base station 104 can increment the first RX_NEXT by one and/or increment RX_DELIV by one. In other implementations, the bases station 104 can set another, second RX_NEXT and/or a second RX_DELIV to an initial value such as zero in response to determining that the UE 102 should enter the RRC_INACTIVE state, in response to transmitting the *RRC Inactive* message, before receiving 660, the first PDCP PDU, or upon receiving 660 the first PDCP PDU. The base station 104 uses the second RX_NEXT and/or the second RX_DELIV to process the first UL PDU. After processing the first PDCP PDU or the first secured packet, the base station 104 can increment the second RX_NEXT by one and/or increment the second RX_DELIV by one.

In some implementations, the PDCP controller 304 of the UE 102 does not set or reset the first TX_NEXT to an initial value. In other words, the UE 102 continues using the first TX_NEXT in data transmission while in the RRC_INACTIVE state irrespective of the RRC state transition. The UE 102 can set COUNT to the first TX_NEXT upon initiating transmission of the data in the RRC_INACTIVE state. The base station 104 in this implementation does not set or reset the first RX_NEXT and/or the first RX_DELIV to the initial values, i.e., continues using the first RX_NEXT and/or the first RX_DELIV irrespective of configuring the RRC state transition of the UE 102. After processing the first PDCP PDU or the first secured packet, the base station 104 can increment the first RX_NEXT by one and/or increment the first RX_DELIV by one.

Generally speaking, to generate 609 the secured packet, the UE 102 can generate and apply a new security key or continue applying the key the UE 102 used 602 in the RRC_CONNECTED state.

For example, the base station 104 in some implementations includes a Next Hop Chaining Count value in the *RRC Inactive* message of event 604. The UE 102 and the base station 104 derive a new base station key, e.g., K_{cNB} or K_{gNB}, according to the Next Hop Chaining Count value. The base station 104 can identify the UE 102 according to UE information (e.g., the *I-RNTI*) received at event 660, so that the base station 104 can identify the Next Hop Chaining Count value assigned to the UE 102. The UE 102 and the base station 104 can derive the one or more security keys (for example, the encryption key and/or the integrity key) from the base station key. For example, the UE 102 and the base station 104 can derive the one or more security keys from the base station key and the at least one security algorithm (e.g., the ciphering algorithm and/or the integrity protection algorithm) in accordance with the techniques specified in 3GPP TS 33.501 or 33.401. If the Next Hop Chaining Count value is a new value which the UE 102 did not receive while operating 602 in the RRC_CONNECTED state, the UE 102 and the base station 104 can derive the base station key from a Next Hop (NH) key.

If the UE 102 received the Next Hop Chaining Count value in the RRC_CONNECTED state 602, the UE 102 and the base station 104 can derive the base station key from another, second base station key (i.e., the "old" base station key). The UE 102 operating in the RRC_CONNECTED state 602 and the base station 104 can use the second base station key to derive at least one second security key (e.g., a second encryption key and/or a second integrity key) e.g., as specified in 3GPP TS 33.501 or 33.401. The UE 102 and the base station 104 can use the at least one second security key to exchange packets associated with the first RB, while the UE 102 is in the RRC_CONNECTED state 602, before entering the RRC_INACTIVE state 605.

Depending on whether integrity protection, encryption, or both integrity protection and encryption are enabled, the UE 102 and the base station 104 can use the one or more keys to encrypt and decrypt packets, generate and verify integrity protection, or both. The UE 102 and the base station 104 in some cases can use RB identity, COUNT, and DIRECTION parameters when generating and processing encrypted packets. More particularly, similar to the techniques discussed above with reference to the (first) integrity protection key or the (first) encryption key, the UE 102 can use the second key to generate integrity protection in the form of a MAC-I and/or encrypt the data alone or the data along with the MAC-I. Further, similar to the techniques discussed above with reference to the (first) security algorithm, the UE 102 in the RRC_CONNECTED state can use a second security algorithm such as a second encryption function for example. The base station 104 accordingly can use the second security key, the second security algorithm, or the inverses of these values and/or functions to process the packets.

In other implementations, the UE 102 and the base station 104 uses the same one or more (first) security key(s) and the one or more (first) security algorithms in the RRC_CONNECTED state as in the RRC_INACTIVE state to communicate packets.

In the scenarios of this disclosure, the COUNT value associated with a packet can include a Hyper Frame Number (HFN) and a PDCP sequence number (SN). For example, if the COUNT value has a length of 32 bits, the most significant bits (MSBs) (e.g., 14 bits) of the COUNT value are the HFN and the least significant bits (LSBs) (e.g., 18 bits) of the COUNT value are the PDCP SN. The first TX_NEXT in the UE 102 and the first RX_NEXT in the base station 104 are of the same length as the COUNT value. For each packet, the UE 102 includes the PDCP SN in a PDCP header of a PDCP PDU. For example, the UE 102 includes a first PDCP SN associated with the first packet in a header of the first PDCP PDU. The UE 102 sets the first PDCP SN to the LSBs of the first (or second) TX_NEXT after the UE 102 sets the first (or second) TX_NEXT to the initial value. If the base station 104 receives 680 the first PDCP PDU from the base station 106, the base station 104 can generate a COUNT value where the MSBs of the COUNT value are equal to the MSBs of the first RX_NEXT, and the LSBs of the COUNT value are equal the first PDCP SN. Alternatively, the LSBs of the COUNT value can be equal to the LSBs of the first RX_NEXT. The COUNT value the base station 104 generates should be the same as the first COUNT value the UE 102 uses for the secured packet. The base station 104 can increment the first RX_NEXT by one after processing the first PDCP PDU. For example, if the initial value for the first RX_NEXT is zero, the base station 104 generates the COUNT value of zero for the first secured packet. The base station 104 sets the first RX_NEXT to one after processing the first PDCP PDU.

The UE 102 in the RRC_INACTIVE state can increment the first TX_NEXT by one after the UE 102 assigns the first PDCP SN to the first secured packet. For example, if the initial value of the first TX_NEXT is zero, the UE 102 generates the COUNT value of zero for the first secure packet. The UE 102 then can set first RX_NEXT to one.

With continued reference to Fig. 6A, the UE 102 can transmit additional, second data to the RAN 105 after transmitting 610 the first UL PDU or the first secured packet. The second data can be an IP packet, an Ethernet packet, or an application packet for example. The second data can be one of multiple subsequent units of data or packets the UE 102 transmits in the RRC_INACTIVE state.

In some implementations, the UE 102 in the RRC_INACTIVE state uses the same one or more (first) security keys, the same (first) one or more security algorithms, and/or the same one or more (first) parameters such as RB identity, COUNT, DIRECTION, etc. to apply to the second data to generate a second secured packet as the UE 102 used 609 to generate the first secured packet. Similar to transmitting 610 the second UL PDU including the first UL PDU, which turn includes the secured packet, the UE 102 can generate the second secured packet, include the secured packet in a third UL PDU, and include the third UL PDU in a fourth UL PDU. The base station 106 can process the third UL PDU and/or the second secured packet in a manner similar to processing event 660. The base station 106 then can transmit the second secured packet or the second data to the base station 104, also similar to event 660. The base station 104 can transmit the second data to the CN 110 or an edge server, similar to the first data.,

In other implementations, however, the UE 102 uses a different key to transmit subsequent data or packets to the RAN 105. The UE 102 can continue using the same security algorithm with the new key, in at least some of the implementations. Thus, if the UE 102 uses the first security key to generate the first secured packet in the RRC_INACTIVE, and (optionally) uses the second security key to generate one or more secure packets in the RRC_CONNECTED state prior to the state transition, here the UE 102 can use a third security key to generate the one or more subsequent secured packets. Similar to the examples above, the UE 102 also can use one or more parameters such RB identity, COUNT, DIRECTION, etc. After the UE 102 transmits the fourth UL PDU including the third UL PDU to the base station 106, the base station 106 and/or the base station 104 can process the second secured packet similar to the first secured packet, but with the third security key.

Further regarding the data or packets the UE 102 transmits subsequently to the first secured packet, the UE 102 and the base station 104 can maintain the TX_NEXT and RX_NEXT counters for these packets or reset the counters.

For example, the third UL PDU can be a PDCP PDU with a (second) PDCP SN. The UE 102 can set the second PDCP SN to the LSBs of TX_NEXT (more specifically, the first or the second TX_NEXT). The UE 102 can increment TX_NEXT by one after assigning the second PDCP SN to the second packet, so that if for example TX_NEXT = *N*+1, then UE 102 increments TX_NEXT to N+2. As a more specific example, the UE 102 can set the second PDCP SN to one and update TX_NEXT to 2. The base station 104 can increment RX_NEXT (more specifically, the first RX_NEXT or the second RX_NEXT) by one after receiving or processing the second secured packet, so that for example if the RX_NEXT is *M+1,* the base station 104 updates RX_NEXT to *M*+2. In the examples above, the values of *M* and *N* can be the same or different for a certain secured packet. As a further example, the base station 104 can assign the value of one to COUNT for the second secured packet and update the value of RX_NEXT to 2. Thus, the UE 102 in the RRC_INACTIVE state can maintain TX_NEXT without resetting TX_NEXT for transmitting subsequent packets; and the base station 104 can maintain RX_NEXT and/or a RX_DELIV (e.g., the first or second RX_DELIV) for receiving subsequent packets from the UE 102.

In other implementations, the UE 102 in the RRC_INACTIVE state sets or resets TX_NEXT to an initial value such as zero for transmitting subsequent secured packets. The base station 104 can set or reset RX_NEXT to an initial value such as zero for receiving subsequent packets from the UE 102. The UE 102 then can set the second PDCP SN to the LSBs to the TX_NEXT after setting TX_NEXT to the initial value. The base station 104 can set RX_NEXT to the initial value for receiving the second secured packet.

With continued reference to Fig. 6A, the UE 102 in some cases transmits 610 the second UL PDU and the fourth UL PDU (to convey data subsequently to the event 610) in the format of a first UL MAC PDU and a second UL MAC PDU, respectively.

In some implementations, the UE 102 in the RRC_INACTIVE state includes the I-RNTI in a MAC control element (CE) in each UL MAC PDU, such as the first UL MAC PDU and/or the second UL MAC PDU. The UE 102 can include a MAC subheader associated with the I-RNTI in the UL MAC PDU. The UE 102 further includes a predetermined logical channel identity in the MAC subheader to indicate/identify the I-RNTI. Thus, the base station 106 can identify and extract the I-RNTI according to the MAC subheader/predetermined logical channel identity. In one implementation, the predetermined logical channel identity is specified as described in 3GPP documents TS 36.321 and 3GPP TS 38.321 for example. In some implementations, the UE 102 also includes a MAC-I MAC CE in the UL MAC PDU. The MAC-I MAC CE includes a MAC-I for the base station 104 to authenticate the UE 102. The base station 106 forwards the MAC-I to the base station 104 at event 680. In one implementation, the MAC-I MAC CE includes an encrypted MAC-I (which can be encrypted) for the corresponding packet, such as the first secured packet or the second secured packet. Depending on the implementation, the first PDCP PDP, the second PDCP PDU, or a subsequent PDCP PDU includes a MAC-I or does not include a MAC-I.

Further, the MAC-I in the MAC-I MAC CE may be in a format of an RRC IE such as a *resumeMAC-I* field. The UE 102 in these cases sets the *resumeMAC-I* to the 16 LSBs of the MAC-I. The *VarResumeMAC-Input* specifies in the input for generating *resumeMAC-I* and is ASN.1-encoded as a sequence of fields of types *sourcePhysCellId, targetCellIdentity*, and *source-c-RNTI.* In particular, the value of *sourcePhysCellId* is set to a physical cell identity (PCI) of a primary cell (PCell) to which the UE 102 was connected prior to entering 605 the RRC_INACTIVE state, i.e., the cell of the base station 104 where the UE 102 receives the *RRC Inactive* message. The value of *source-c-RNTI* is set to a C-RNTI that the UE 102 had in the PCell to which it was connected prior to entering the RRC_INACTIVE state, i.e., the C-RNTI assigned by the base station 104 to the UE 102. The value of *targetCellIdentity* is set to a *cellIdentity* of the first *PLMN-Identity* included in a *PLMN-IdentityInfoList* broadcast in a *SIB1* of a cell of the base station 106, i.e. the cell in which the UE 102 is trying to transmit the first PDCP PDU. The UE 102 calculates these bits with the "old" integrity key and the "old" integrity protection algorithm the UE 102 in the RRC_CONNECTED state 602, and with all input bits for COUNT, BEARER and DIRECTION set to binary ones.

In some implementations, the UE 102 in RRC_INACTIVE state can perform a random access procedure with the base station 106 to transmit the first PDCP PDU and/or the third PDCP PDU. The random access procedure can be a four-step random access procedure of Fig. 4A or a two-step random access procedure of Fig. 4B.

When the random access procedure is a four-step random access procedure, the UE 102 transmits 402 a random access preamble to the base station 106, receives 404 a RAR from the base station 106 (see Fig. 4A), and then the UE 102 transmits a UL MAC PDU (e.g., the first UL MAC PDU of event 610 or the second UL MAC PDU) to the base station 106, at event 406, using the UL grant included in the RAR 404.

The UE 102 can receive a DL MAC PDU responsive to the UL MAC PDU for contention resolution from the base station 106 (even 408). If the random access procedure is a two-step random access procedure, the UE 102 transmits 452 a random access preamble and a PUSCH payload including a UL MAC PDU (e.g., the first UL MAC PDU 510 or the second UL MAC PDU) to the base station 106. As discussed above, during the two-step random access procedure, the random access preamble and the PUSCH payload make up a MsgA. Thus, the UE 102 in this scenario transmits the MsgA at event 610. The UE 102 receives a MsgB responding to the MsgA from the base station 106 at event 454. The MsgB includes a DL MAC PDU for contention resolution.

In one implementation, the MAC controller 152 of the base station 106 includes the *I-RNTI* in the DL MAC PDU. If the MAC controller 302 of the UE 102 identifies the *I-RNTI* in the DL MAC PDU, the UE 102 determines that the random access procedure completed successfully, i.e., that contention resolution was successful. In another implementation, the base station 106 receives a MAC SDU including the PDCP PDU or an RLC PDU including the PDCP PDU in the UL MAC PDU of event 610, and the base station 106 includes the first *X* bits of the MAC SDU, the RLC PDU or the PDCP PDU in a MAC UE in the DL MAC PDU. If the UE the MAC controller 302 identifies the first Xbits of the MAC SDU, the RLC PDU or the PDCP PDU in the DL MAC PDU, the UE 102 determines the random access procedure completed successfully. The *"X"* can be a positive integer such as 32, 40, 48, 60 or 64. In some implementations, the "*X*" can be 48 specified in a 3GPP specification, e.g., 36.321 or 38.321. Alternatively, the "X" can be configured by the base station 104 in the *RRC Inactive* message. Yet alternatively, the *"X"* can be configured in system information broadcast by the base station 106 on cell 126.

As discussed above with reference to Fig. 1B, the base station 106 in some implementations is distributed and includes a CU 172 and one or multiple DUs 174. In some of these implementations, the MAC controller 152 can operate in the DU(s) 174, and the RRC controller 156 and the PDCP controller 154 can be in the CU 172. The DU 174 can perform the random access procedure with the UE 102 and extract the PDCP PDU from the UL MAC PDU of event 610, and then transmit the PDCP PDU to the CU 172. In one implementation, the DU 174 can extract the *I-RNTI* from the UL MAC PDU and transmit the *I-RNTI* to the CU 172 along with the PDCP PDU. In another implementation, the DU 174 can extract the MAC-I from the UL MAC PDU transmits the MAC-I to the CU 172 along with the PDCP PDU. In some implementations, the DU 174 generates the DL MAC PDU. The CU 172 (e.g., the PDCP controller 154) processes the secured packets to retrieve or obtain the data as described above.

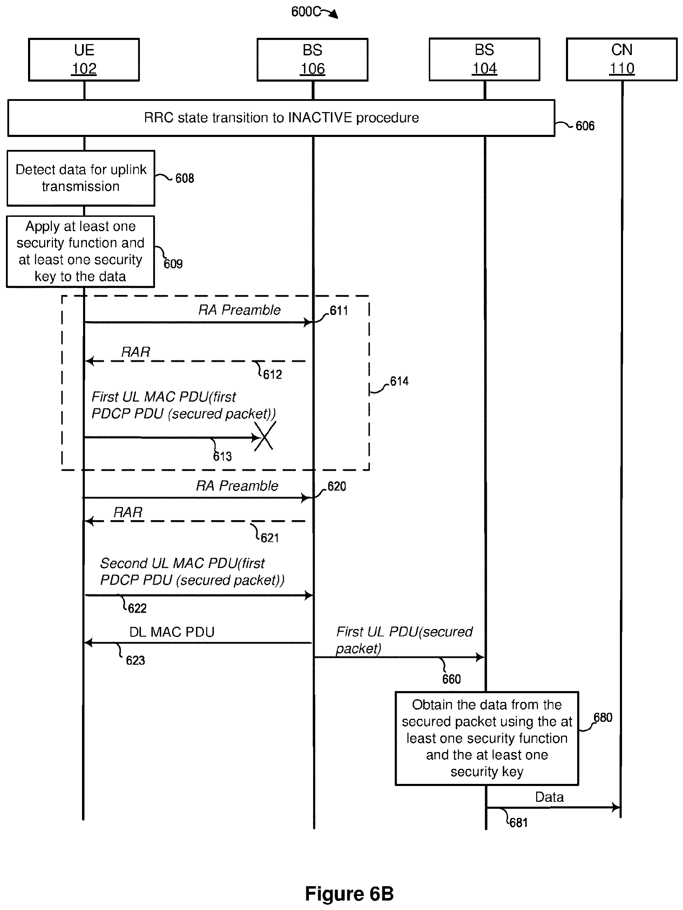

Next, several example scenarios in which the UE 102 fails (at least initially) to successfully transmit a secured packet to the RAN 105 in the RRC_INACTIVE state are discussed with reference to Figs. 6B-D.

Referring first to a scenario 600B of Fig. 6B, the UE 102 in this case fails to successfully transmit a secured packet and performs a second random access procedure to transmit the secured packet. The scenario 600B includes events 606, 608, 609, 660, 680, and 681 discussed above with reference to Fig. 6A. Certain details of the scenario 600B, as well as the differences between the scenarios of Fig. 6A and Fig. 6B, are discussed next.

The UE 102 (e.g., the MAC controller 302) in RRC_INACTIVE state performs 614 a random access procedure to transmit a PDCP PDU. The first random access procedure can be a four-step random access procedure or a two-step random access procedure. The UE 102 transmits 611 a first RA preamble to the base station 106. The UE 102 may receive 612 a first RAR responsive to the first RA preamble from the base station 106. The UE 102 then fails 613 to transmit the first UL MAC PDU including the PDCP PDU. Thus, the UE 102 fails the first random access procedure.

In some scenarios, the UE 102 fails the first random access procedure because the UE 102 does not receive a DL MAC PDU for contention resolution. In one example, the UE 102 does not receive a DL MAC PDU including the *I-RNTI* for contention resolution from the base station 106. In another example, the UE 102 does not receive a DL MAC PDU including the first *X* bits of the PDCP PDU for contention resolution, or the first *X* bits of a MAC SDU (or an RLC PDU) including the PDCP PDU in the first UL MAC PDU for contention resolution, from the base station 106. In other scenarios, the UE 102 may not receive the RAR 612 after the UE 102 transmits 611 the first RA preamble. In yet other scenarios, the UE 102 fails the first random access procedure with a first cell of the base station 106 due to cell (re)selection to a second cell of the base station 106. In this case, the UE 102 stays in RRC_INACTIVE state in response to the failure.

If the first random access procedure is the two-step random access procedure, the base station 106 does not transmit 612 the RAR, and the UE 102 transmits 611 the first RA preamble and transmits 613 the PUSCH payload including the first UL MAC PDU as event 452 in Fig. 4B. Depending on the scenario, there may be a time gap between the first RA preamble and the first PUSCH payload or no gap between these transmissions.

In response to detecting a failure of the first random access procedure 614, the UE 102 can perform a second random access procedure (events 620, 621, 622, and 623) with the base station 106 to again attempt a transmission of the first PDCP PDU. If the UE 102 fails the first random access procedure 614 due to cell (re)selection to the second cell, the UE 102 performs the second random access procedure on the second cell. The second random access procedure can be a four-step random access procedure or a two-step random access procedure. In particular, the UE 102 can transmit 620 a second RA preamble to the base station 106. After receiving 621 a second RAR responsive to the second RA preamble, the UE 102 transmits 622 a second UL MAC PDU including the first PDCP PDU. The UE 102 then can receive 623 a DL MAC PDU for contention resolution from the base station 106. In one example, the UE 102 receives 623, from the base station 106, a DL MAC PDU including the *I-RNTI* for contention resolution. In another example, the UE 102 receives 623 a DL MAC PDU including the first *X* bits of the first PDCP PDU for contention resolution, or the first *X* bits of a MAC SDU (or an RLC PDU) including the first PDCP PDU in the second UL MAC PDU for contention resolution.

If the second random access procedure is a two-step random access procedure, the UE 102 can transmit a second random access preamble and a second PUSCH payload including the second UL MAC PDU to the base station 106 as event 452 in Fig. 4B. The DL MAC PDU 622 in this case is a MsgB, which is event 454 in Fig. 4B. Depending on the scenario, there is a time gap between the second RA preamble of event 620 and the second PUSCH payload of event 622, or no gap between these events.

Further, the base station 106 in some implementations includes the *I-RNTI* in a MAC CE in the DL MAC PDU of event 623. If the UE 102 identifies the *I-RNTI* in the DL MAC PDU of event 623, the UE 102 determines that the second random access procedure including events 620-623 completed successfully, i.e., there was a successful contention resolution. In another implementation, the base station 106 includes the first 48 bits of the MAC SDU (or the RLC PDU) of event 622 in a MAC UE in the DL MAC PDU of event 623. If the UE 102 identifies the first 48 bits of the MAC SDU (or the RLC PDU) in the DL MAC PDU of event 623, the UE 102 determines that the second random access procedure (events 620-623) completed successfully. In yet another implementation, the base station 106 includes the first 48 bits of the first PDCP PDU of event 622 in a MAC CE in the DL MAC PDU of event 623. If the UE 102 identifies the first 48 bits of the first PDCP PDU in the DL MAC PDU of event 623, the UE 102 determines the first random access procedure completed successfully.

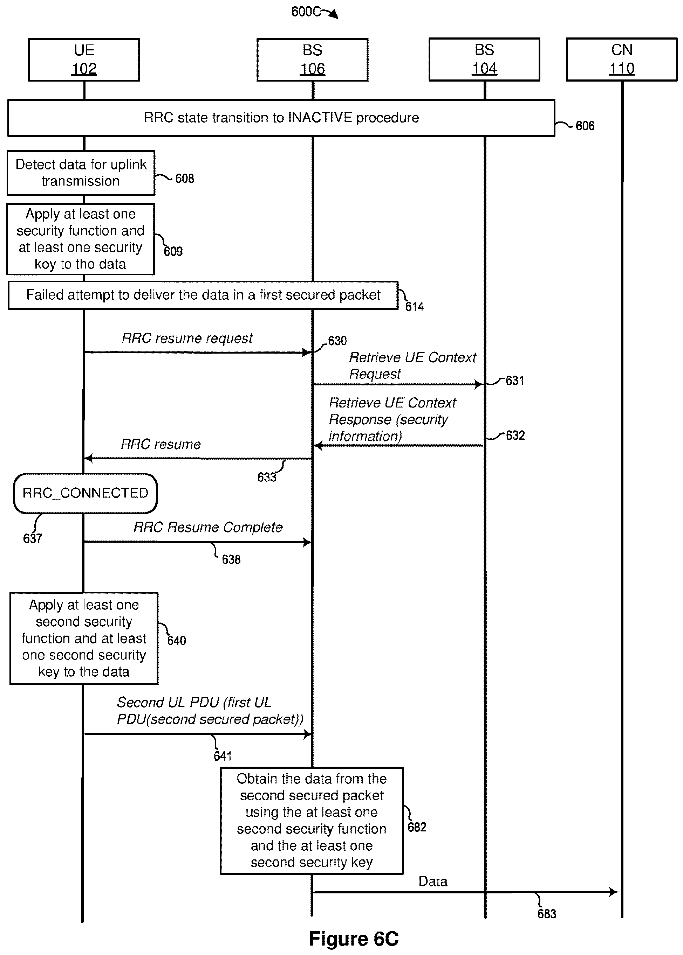

Now referring to Fig. 6C, the UE 102 in the scenario 600C also fails to successfully transmit a secured packet on the initial attempt, as in the scenario 600B of Fig. 6B. However, the UE 102 in this case performs an RRC connection resume procedure in order to transition to RRC_CONNECTED and transmit the secured packet. As discussed below, the UE 102 in this scenario can re-transmit the previously generated secured packet or generate a new secured packet based on the data the UE 102 initially failed to transmit successfully. The scenario 600C includes events 606, 608, 609, and 614 discussed above with reference to Fig. 6A or Fig. 6B. Certain details of the scenario 600C, as well as the differences between the scenarios of Fig. 6C and Fig. 6A (and/or Fig. 6B), are discussed next.

In response to detecting the failed initial attempt to deliver the secured packet 614, the UE 102 initiates an RRC resume procedure including events 630-633, 637, and 638. To initiate this procedure, the UE 102 transmits 630 an *RRC resume request* message. The UE 102 can include the *I-RNTI* and a *resumeMAC-I* in the *RRC resume request* message. The UE 102 can generate the value of *resumeMAC-I* as described above with reference to Fig. 6A. In response to the *RRC resume request* message, the base station 106 can transmit 631 a *Retrieve UE Context Request* message to the base station 104 for the UE 102. In response, the base station 104 transmits 632 a *Retrieve UE Context Response* message including security information to the base station 106. The base station 106 then can transmit 633 an *RRC resume* message to the UE 102. In response to receiving 633 the *RRC resume* message, the UE 102 transitions 637 to the RRC_CONNECTED state and transmits 638 an *RRC resume complete* message to the base station 106.

The messages *RRC resume request, RRC resume* and *RRC resume complete* in some implementations can be *RRCResumeRequest, RRCResume* and *RRCResumeComplete* messages specified in document 3GPP TS 38.331. In another implementations, the messages can be *RRCConnectionResumeRequest, RRCConnectionResume and RRCConnectionResumeComplete* messages conforming to document 3GPP TS 36.331.

The UE 102, now operating 637 in the RRC_CONNECTED state, applies 640 one or more security functions to the data to generate a (second) secured packet. The data contents of this second secured packet may be the same or different from the data contents of the first secured packet from failed random access procedure 614. To this end, the UE 102 can use at least one (second) security key and at least one (second) security algorithm. The UE 102 transmits 641 a PDCP PDU including the second secured packet to the base station 106. The base station 106 retrieves 682 the second secured packet from the PDCP PDU. The base station 106 then retrieves 682 the data from the second secured packet using at least one second security key and at least one second security algorithm and transmits 683 the first packet to the CN 110 or the edge server.

In some implementations, the UE 102 and the base station 106 use the same one or more security keys and the same one or more security algorithms at events 640 and 682, respectively (or these keys and/or algorithms can have an inverse relationship, but in any case be mathematically related). Further, in some implementations, the UE 102 uses the same one or more security keys and the same one or more security algorithms at events 609 and 640.

In one implementation, the at least one first security key and the at least one first security algorithm 609 are identical to the at least one second security key and the at least one second security algorithm 640. In this implementation, if the UE 102 generates the PDCP PDU during the procedure 614, the UE 102 need not perform the event 640 and simply reuse the previously generated (first) secured packet as the second secured packet. The base station 104 can include the first base station key and the at least one first security algorithm in the security information of event 632, so that the base station 106 can derive the at least one first security key from the first base station key and the at least one first security algorithm. In another implementation, the at least one first security key of event 609 is not identical to the at least one second security key of event 640. The UE 102 can derive the at least one second security key from the first base station key and the at least one first security algorithm, e.g., as specified in 3GPP TS 33.501 or 33.401. The base station 104 similarly can include the first base station key and the at least one first security algorithm in the security information 632, so that the base station 106 can derive the at least one second security key from the first base station key and the at least one first security algorithm e.g., as specified in 3GPP TS 33.501 or 33.401.

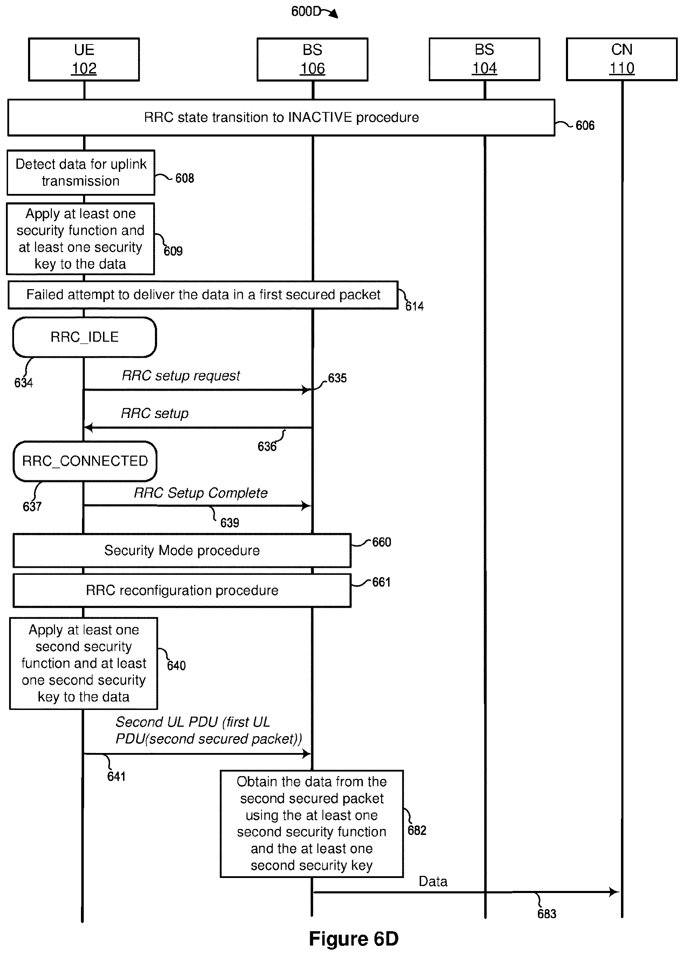

Next, a scenario 600D in which fails to successfully transmit a secured packet on the initial attempt and performs an RRC reestablishment procedure is discussed with reference to Fig. 6D. The scenario 600D includes events 606, 608, 609, 614, 682, and 683 discussed above with reference to Fig. 6A or Fig. 6B. Certain details of the scenario 600D, as well as the differences between the scenarios of Fig. 6D and Fig. 6A (and/or Figs. 6B and Fig. 6C), are discussed next.

In response to failing 614 to transmit the first secured packet, the UE 102 transitions 634 to RRC_IDLE and initiates an RRC connection establishment procedure including events 635, 636, 637, and 639. In particular, the UE 102 transmits 635 an *RRC setup request* message to the base station 106. After transitioning 634 to the RRC_IDLE state, the UE 102 releases the RB(s) and the *I-RNTI.* In response to receiving 635 the *RRC setup request* message, the base station 106 transmits 636 an *RRC setup* message to the UE 102. The UE 102 transitions 637 to the RRC_CONNECTED state and transmits 649 an *RRC setup complete* message, responsive to the *RRC setup* message of event 636, to the base station 106.

The base station 106 can perform 660 a security mode procedure with the UE 102 to activate security (e.g., encryption and/or integrity protection) for subsequent communication between the UE 102 and the base station 106. During the security mode procedure, the base station 106 transmits a *SecurityModeCommand* message to the UE 102 and receives a *SecurityModeComplete* message from the UE 102. In response to the *SecurityModeComplete* message, the UE 102 can derive a new base station key (the second base station key), such as K_{cNB} or K_{gNB}. The base station 106 also derives the second base station key.

The UE 102 and the base station 106 can derive at least one second security key, which is distinct from the first security key the UE 102 applies at event 609 prior to the failed transmission attempt 614. To derive the at least one second security key, the UE 102 and the base station 106 can use the second base station key and the security configuration applicable to the corresponding security algorithm, included in the *SecurityModeCommand* message. The at least one second security key can include a second integrity key and a second encryption key, and the at least one second security algorithm can include a second ciphering algorithm and a second integrity algorithm. In some implementations, the UE 102 and the base station 106 derive the second integrity key from the second base station key and the second integrity algorithm. The UE 102 and the base station 106 derive the second encryption key from the second base station key and the second ciphering algorithm. For example, the UE 102 and the base station 106 can derive the second base station key, and derive the at least one second security key from the second base station key and the at least one second security algorithm, e.g., as specified in 3GPP TS 33.501 or 33.401.

After activating the security, the base station 106 can perform 661 an RRC reconfiguration procedure with the UE 102 to configure a DRB. During the RRC reconfiguration procedure, the base station 106 transmits to the UE 102 an *RRC reconfiguration* message configuring the DRB, and the UE 102 transmits an *RRC reconfiguration complete* message to the base station 106 in response. The *RRC reconfiguration* message can enable integrity protection for the DRB or omit integrity protection.

The UE 102 applies 640 applies the at least one security function to the data and uses the at least one second security key and the at least one second security algorithm to generate the second secured packet. If the *RRC reconfiguration* message of the procedure 661 enables encryption but does not enable the integrity protection for the DRB, the UE 102 does not perform integrity protection on the data and encrypts the data using the second encryption key and the second ciphering algorithm. Thus, the second secured packet in this case includes encrypted data. The UE 102 then generates a PDCP PDU including the second secured packet and transmits 641 the PDCP PDU to the base station 106. If the *RRC reconfiguration* message of event 661 enables encryption as well as integrity protection for the DRB, the UE 102 performs integrity protection on the data to generate a MAC-I for the data and encrypts the MAC-I along with the data to generate encrypted data and an encrypted MAC-I. Thus, the second secured packet in this case includes the encrypted data and the encrypted MAC-I. Finally, if the *RRC reconfiguration* message of event 661 enables integrity protection but does not enable encryption for the DRB, the UE 102 performs integrity protection on the data to generate a MAC-I, and the secured packet this case includes the data and the MAC-I.

With continued reference to Fig. 6D, the UE 102 generates a PDCP PDU including the second secured packet and transmits 641 the PDCP PDU to the base station 106 via the DRB with which the data is associated. The base station 106 retrieves 682 the second secured packet from the PDCP PDU and then obtains 682 the data from the second secured packet using the at least one second security key and the at least one second security algorithm. The base station 106 then transmits 683 the data to the CN 110 or the edge server. Similar to the discussion above, if the *RRC reconfiguration* message enables encryption but does not enable integrity protection for the DRB, the base station 106 decrypts 682 the first packet using the at least one second encryption key and the second ciphering algorithm to obtain the data. If the *RRC reconfiguration* message enables encryption as well as integrity protection for the DRB, the base station 106 decrypts the second secured packet and the encrypted MAC-I to obtain the data and the MAC-I. The base station 106 then confirms that the MAC-I is valid for the data. If the base station 106 confirms that the MAC-I is valid, the base station 106 obtains the data; otherwise, the base station 106 discards the secured packet.

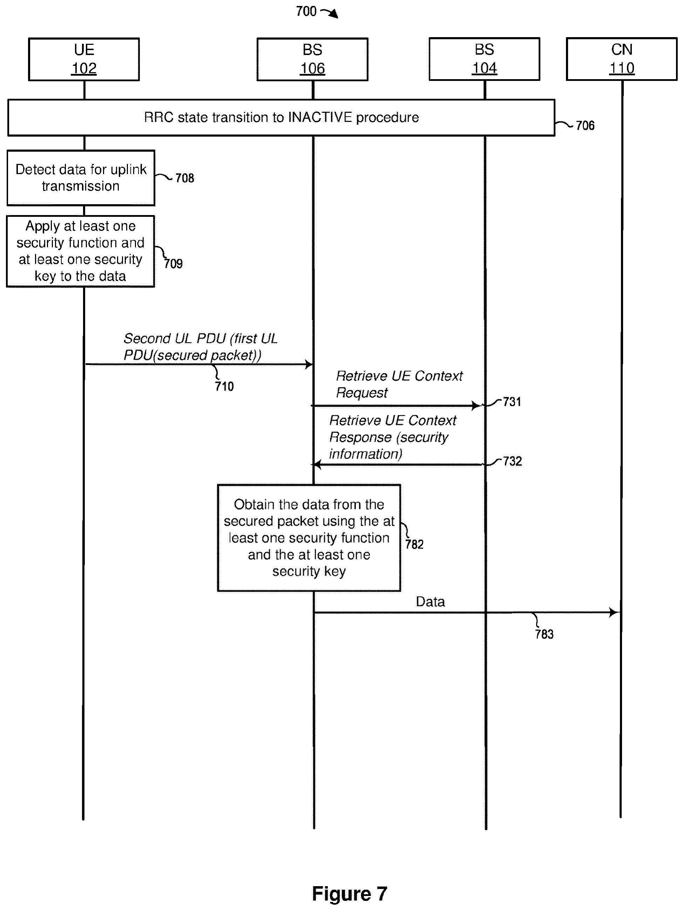

Next, Fig. 7 illustrates a scenario 700 in which the UE 102 in the RRC_INACTIVE state transmits a secured packet to the base station 106. This scenario is generally similar to the scenario of Fig. 6A, but here the base station 106 rather than the base station 104 retrieves the data from the secured packet and forwards the data to the CN 110 or an edge server. The differences between the scenarios of Fig. 7 and 6A are considered below.

After events 706, 708, and 709 (similar to the events 606, 608, and 609, respectively), the UE 102 transmits 710 the second UL PDU including the first UL PDU as described for with reference to Fig. 6A. In response to the second UL PDU 710, the base station 106 transmits 731 a *Retrieve UE Context Request* message to the base station 104, for the UE 102. The base station 104 transmits 732 a *Retrieve UE Context Response* message including security information to the base station 106 in response to the *Retrieve UE Context Request* message. The base station 104 can include the first base station key and the at least one first security algorithm in the security information of event 732, so that the base station 106 can derive the at least one first security key according to the first base station key and the at least one first security algorithm e.g., as specified in 3GPP TS 33.501 or 33.401. The at least one first security key derived by the base station 106 can be identical to the at least one first security key derived by the UE 102. The at least one first security algorithm received in the security information can be identical to the at least one first security algorithm used by the UE 102.

The base station 106 then retrieves 782 the first UL PDU from the second UL PDU and retrieves the secured protected packet from the first UL PDU. The base station 106 then obtains 782 the data from the secured packet using the at least one first security key and the at least one first security algorithm. The base station 106 transmits 783 the data to the CN 110 or the edge server. The UE 102 the can transmit a subsequent, second packet to the base station 106 as discussed with reference to Fig. 6A.

In some implementations, the base station 106 may include the *I-RNTI* in the *Retrieve UE Context Request* message. The base station 106 can transmit the *I-RNTI* to the base station 104, so that the base station 104 can identify the UE 102 according to the *I-RNTI.* The base station 104 may identify the security information 613 according to the *I-RNTI.*

In some implementations, the base station 106 transmits a *Path Switch Request* message to the AMF 112 to trigger the CN 110 to switch a DL data path toward the base station 106 and establish an NG-C interface instance toward the base station 106. The CN 110 accordingly switches the DL data path toward the base station 106 in response to the *Path Switch Request* message. In one implementation, the AMF 112 transmits a UPF request message to the UPF 116 to switch the DL data path toward the base station 106 in response to the *Path Switch Request* message, and the UPF 116 switches the DL data path toward the base station 106 in response to the UPF request message. The UPF 116 can transmit a UPF response message to the AMF 112 in response to the UPF request message. In another implementation, the AMF 112 transmits a SMF request message to the SMF 114 in response to the *Path Switch Request* message, and the SMF 114 in turn transmits a UPF request to switch the DL data path toward the base station 106 in response to the SMF request message, and the UPF 116 switches the DL data path toward the base station 106 in response to the UPF request message. The UPF 116 can transmit a UPF response message to the SMF 114 in response to the UPF request message. The SMF 116 can transmit an SMF response message to the AMF 112 in response to the SMF request message. The UPF 116 can transmit one or more "end marker" packets on the old path to the base station 104 per PDU session/tunnel and then can release any U-plane/TNL resources toward the base station 104. The AMF 112 can transmit a *Path Switch Request Acknowledge* message to the base station 106 in response to the *Path Switch Request* message.

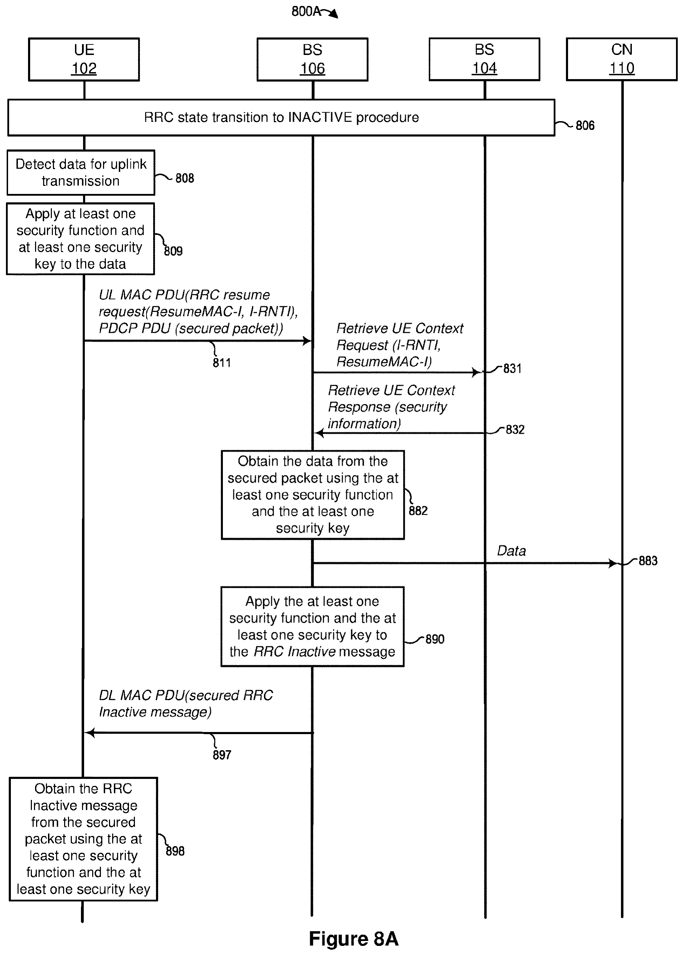

Now referring to Fig, 8A, a scenario 800A is generally similar to the scenario of Fig. 6A, but here the UE 102 transmits a secured packet to the base station 106 along with a request to resume the RRC connection. Events 806, 808, and 809 are similar to events 606, 608, 609 discussed above. Certain details of the scenario 800A, as well as the differences between the scenarios of Fig. 8A and Fig. 6A, are discussed next.

After the UE generates 809 a secured packet, the UE 102 generates a PDCP PDU including the secured packet. The UE 102 includes the *I-RNTI* and *resumeMAC-I* in an *RRC resume request* message. The UE 102 includes the *RRC resume request* message and the PDCP PDU in a UL MAC PDU and transmits 811 the UE MAC PDU to the base station 106.

In response receiving 811 the *RRC resume request* message, the base station 106 transmits 831 a *Retrieve UE Context Request* message to the base station 104, for the UE 102. The base station 106 includes the *I-RNTI* and *resumeMAC-I* in the *Retrieve UE Context Request* message. The base station 104 can identify an Inactive UE context of the UE 102 according to the *I-RNTI.* The Inactive UE context includes the PCI of the PCell for the UE 102 (i.e., *sourcePhysCellId*), the C-RNTI assigned by the base station 104 to the UE 102 (i.e., *source-c-RNTI*)*, a cellIdentity* of the first *PLMN-Identity* included in a *PLMN-IdentityInfoList* broadcast in a *SIB1* of a cell of the base station 106 (i.e., *targetCellIdentity*), the old integrity key and the old integrity protection algorithm which was used by the UE 102 in the RRC_CONNECTED state prior to the transition 806. The base station 104 can verify that the *resumeMAC*-I is valid using the UE Inactive context. If the base station 104 confirms *resumeMAC-I* is valid, the base station 104 transmits 832 *Retrieve UE Context Response* message including security information to the base station 106. The base station 104 can include the first base station key and the at least one first security algorithm in the security information of event 832, so that the base station 106 can derive the at least one first security key from the first base station key and the at least one first security algorithm e.g., as specified in 3GPP TS 33.501 or 33.401. The at least one first security key derived by the base station 106 can be identical to the at least one first security key derived by the UE 102. The at least one first security algorithm included in the security information of event 832 can be identical to the at least one first security algorithm the UE 102 uses at event 809.

With continued reference to Fig. 8A, the base station 106 in the scenario 800A retrieves 882 the PDCP PDU from the UL MAC PDU and obtains 882 the secured packet from the PDCP PDU. The base station 106 then can retrieve 882 the data from the secured packet using the at least one first security key and the at least one first security algorithm. The base station 106 transmits 882 the data to the CN 110 or the edge server.

Next, the base station 106 generates an *RRC inactive* message and applies 890 a security function the *RRC inactive* message using the at least one first security key and the at least one first security algorithm, so as to generate a secured *RRC inactive* message. The base station 106 transmits 897 a DL MAC PDU including the secured *RRC inactive* message to the UE 102. The UE 102 then obtains 898 the *RRC inactive* message from the secured *RRC inactive* message using the at least one first security key and the at least one first security algorithm. The UE 102 continues to operate in the RRC_INACTVE in response to the *RRC inactive* message of event 897.

In some implementations, the base station 106 also uses one or more parameters when applying the security function to the data, in addition to the at least one first security key and the at least one first security algorithm. The one or more parameters can include an SRB identity (e.g., for SRB1), a COUNT value associated to the *RRC inactive* message, and/or a DIRECTION bit (e.g. one), as discussed above with reference to Fig. 6A.

In some implementations, the at least one first security key includes a first encryption key and a first integrity key, and the at least one first security algorithm includes a first ciphering algorithm and a first integrity protection algorithm. To secure 890 the *RRC inactive* message, the base station 106 can performs integrity protection on the *RRC inactive* message using the first integrity key and the first integrity protection algorithm, and encrypts the *RRC inactive* message using the first encryption key and the first ciphering algorithm. More particularly, the base station 106 can generate a MAC-I for the *RRC inactive* message using the first integrity key and the first integrity protection algorithm, and then encrypt the *RRC inactive* message and the MAC-I to generate an encrypted *RRC inactive* message and an encrypted MAC-I, respectively, using the first encryption key and the first ciphering algorithm. Thus, the secured *RRC inactive* message in this case includes the encrypted *RRC inactive* message and the encrypted MAC-I.

In some cases, the *RRC inactive* message of event 897 includes an I-RNTI which can be the same as or different from the I-RNTI in the *RRC resume request* message of event 811. In one implementation, the *RRC inactive* message is an *RRCRelease* message with a *SuspendConfig* IE that causes the UE 102 to transition to the RRC_INACTIVE (rather than RRC_IDLE) state. In another implementation, the *RRC inactive* message is the *RRCConnectionRelease* message with an *RRC-InactiveConfig-r15* IE which similarly causes the UE 102 to transition to the RRC_INACTIVE (rather than RRC_IDLE) state.

In some implementations, the base station 106 receives a DL packet from the CN 110 after event 883 or before event 897. The base station 106 applies the security function to the DL packet using the same at least one first security key and at least one first security algorithm to obtain a secured DL packet. The base station 106 also can use the one or more parameters discussed above (RB identity, COUNT, DIRECTION, etc.) to generate a secured DL packet based on the DL packet, in addition to using the at least one first security key and the at least one first security algorithm. The base station 106 can include the secured DL packet in the DL MAC PDU of event 897.

Further, to generate a secured DL packet, the base station 106 in some cases performs integrity protection on the DL packet message using the first integrity key and the first integrity protection algorithm, and/or encrypts DL packet by using the first encryption key and the first ciphering algorithm. As discussed above with reference to uplink and downlink transmissions above, the base station 106 can apply integrity protection, encryption, or both. For example, the base station 106 can generate a MAC-I for the DL packet using the first integrity key and the first integrity protection algorithm when integrity protection is enabled. When encryption is enabled, the base station 106 can encrypt the DL packet alone (if only encryption is enabled) or both the DL packet and the MAC-I (when both integrity protection and encryption are enabled).

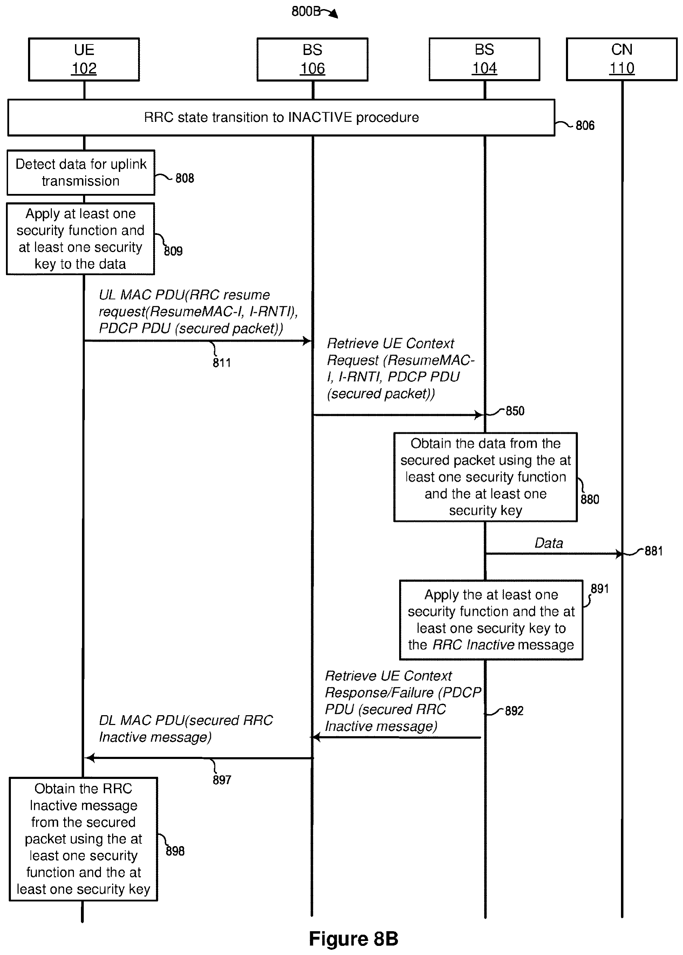

Next, Fig. 8B is a messaging diagram of an example scenario 800B in which the base station 106 forwards the secured packet along with the request to resume the RRC connection to the base station 104 rather than apply the security function locally. Certain details of the scenario 800B, as well as the differences between the scenarios of Fig. 8B and Fig. 8A, are discussed next.

After events 806, 808, 809, and 811 discussed above, the base station 106 transmits *850 Retrieve UE Context Request* message to the base station 104. Unlike the message of event 831 (see Fig. 8A), the *Retrieve UE Context Request* message of event 850 includes the PDCP PDU that in turn includes the secured packet. The base station 106 in this case does not apply one or more security functions such as integrity checking or decryption to the secured packet. After receiving 850 the *Retrieve UE Context Request* message, the base station 104 retrieves the secured packet from the PDCP PDU and obtains the data from the secured packet by applying one or more security functions to the secured packet. Similar to the scenarios above, the base station 104 can apply one or more security algorithms and one or more security keys identical or corresponding to the security algorithms the UE 102 uses at event 809. As also discussed above, these one or more algorithms and keys can pertain to integrity protection, encryption, or both.

The base station 104 then transmits 881 the data to the CN 110. Next, the base station 105 applies the one or more security functions to an *RRC inactive* message to generate a secured *RRC inactive* message, formats a PDCP PDU including the secured *RRC inactive* message, and transmits 892 the PDCP PDU to the base station 106 in a *Retrieve UE Context Response* message or *Retrieve UE Context Failure* message. The base station 106 then transmits the secured *RRC inactive* message to the UE 102 in a DL MAC PDU. The UE then obtains 898 the *RRC inactive* message from the secured *RRC inactive* message, as discussed above with reference to Fig. 8A.

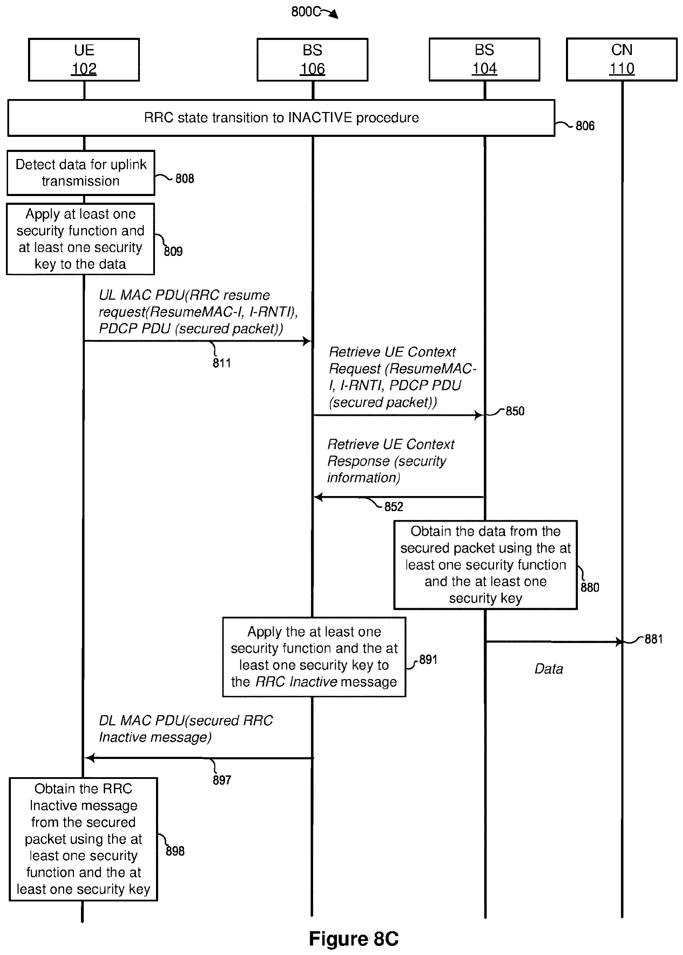

Fig. 8C is a messaging diagram of an example scenario 800C in which the base station 106 forwards the secured packet along with the request to resume the RRC connection to the base station 104, similar to the scenario of Fig. 8B, and also generates a secured *RRC inactive* message. Certain details of the scenario 800C, as well as the differences between the scenarios of Fig. 8C and Figs. 8A and 8B, are discussed next.

After the events 806, 808, and 809, 811, and 850 discussed above, the base station 106 receives 852, from the base station 104, a *Retrieve UE Context Response* message or a *Retrieve UE Context Failure* message including security information (similar to event 832 discussed with reference to Fig. 8A). The base station 104 retrieves 880 the secured packet from the PDCP PDU and obtains the data, similar to event 860 discussed above, and then transmits 881 the data to the CN 110 or an edge server. The base station 106 uses the one or more security algorithms and the one or more security keys specified in the security information of event 852 to generate a secured *RRC inactive* message. The base station 106 then transmits 897 the secured RRC message in a DL MAC PDU.

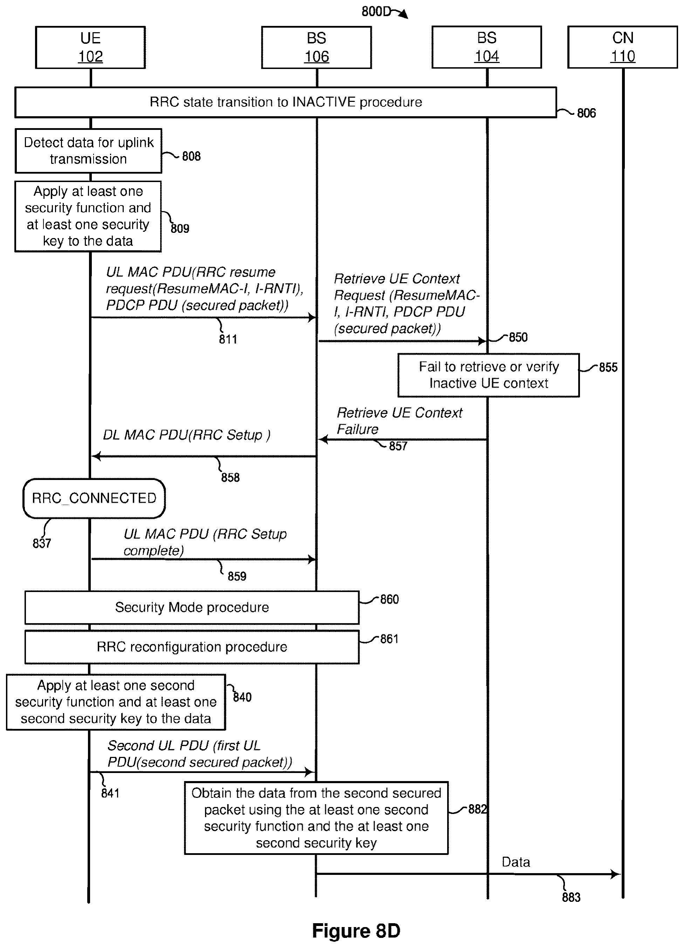

Next, Fig. 8D illustrates a messaging diagram of an example scenario 800D in which the base station 106 forwards the secured packet along with the request to resume the RRC connection to the base station 104, but the base station 104 fails to retrieve or verify the inactive UE context. Certain details of the scenario 800D, as well as the differences between the scenarios of Fig. 8D and Figs. 8A-C are discussed next.

After the events 806, 808, and 809, 811, and 850 discussed above, the base station 104 retrieves the *I-RNTI* of the UE 102 from the *Retrieve UE Context Request* message. The base station 104 then fails 855 to identify the UE 102, for any valid reason, and transmits 857 *a Retrieve UE Context Failure* message. Unlike some of the scenarios above, the *Retrieve UE Context Failure* message in this scenario does not include a PDCP PDU, and the base station 106 determines that the base station 104 in this case does not use the *Retrieve UE Context Failure* message "strategically" to convey an *RRC inactive* message, for example. The base station 106 accordingly generates an *RRC setup* message and transmits 858 the *RRC setup* message to the UE 102 in a DL MAC PDU. More particularly, the base station 106 can configure a new RRC connection for the UE 102.

In response to receiving 858 the *RRC setup* message, the UE 102 transitions 837 to the RRC_CONNECTED state, responds to the *RRC setup* message by transmitting 859 an *RRC setup complete* message to the base station 106 in a UL MAC PDU. The UE 102 and the base station 106 then can conduct a security mode procedure 860 and an RRC reconfiguration procedure 861, similar to the procedures 660 and 661 discussed above.

Then, to transmit the data to the base station 106, the UE 102 can apply 840 at least one second security function and at least one second security key to the data. Here, the UE 102 can implement techniques similar to those discussed above in connection with generating and applying second security keys and second algorithms (see Figs. 6A, 6B, or 6C, for example). The UE 102 then transmits 841 a second UL PDU including the first UL PDU, which in turn incudes the second secured packet. The base station 106 then can process 882 the first UL PDU, the second UL PDU, and the secured packet to obtain the data and transmit 883 the data to the CN 110 or the edge server.

Next, several example methods that can be implemented in the UE or in one or more base station to support communications in RRC_INACTIVE are discussed next with reference to Figs. 9-15.

Referring first to Fig. 9, the UE 102 or another suitable device can implement an example method 900 to determine whether data can be transmitted in an inactive state of the protocol for controlling radio resources, such as RRC_INACTIVE. The method 900 begins at block 902, where the UE 102 detects that data is available for transmission to the RAN. At block 906, the UE 102 determines whether the data is associated with an IP Multimedia Subsystem (IMS). When the data is associated with IMS, the flow proceeds to block 922, where the UE resumes the RRC connection with the RAN prior to transmitting the data. Otherwise, when the UE 102 determines that the data is not associated with IMS, the flow proceeds to block 920.

At block 920, the UE 102 attempts to transmit the data in the RRC_INACTIVE state. As discussed above with reference to Figs. 6A-8D, the UE 102 can apply one or more security functions to the data to generate a secured packet. In some scenarios (see Figs. 6A, 7, 8A-C), the UE 102 is successful on the first attempt; in other scenarios (see Figs. 6B-D, 8D), the UE 102 detects the failure and makes a state transition at the RRC sublayer prior to successfully transmitting the data to the RAN 105, and ultimately to the CN 110 or an edge server.

Next, Fig. 10 illustrates another example method 1000 the UE 102 or another suitable device can implement to determine whether data can be transmitted in an inactive state of the protocol for controlling radio resources. The method 1000 begins at block 1001, where the UE 102 determines that information is available for transmission to the RAN. At block 1004, the UE 102 determines whether the information is associated with control-plane signaling or other data (e.g., IMS packets, IP packets, application packets). When the information is associated with the control plane, the flow proceeds to block 1022, where the UE resumes the RRC connection with the RAN prior to transmitting the information. Otherwise, when the UE 102 determines that the information is data other than control-plane signaling, the flow proceeds to block 1020, where the UE 102 attempts to transmit the data in the RRC_INACTIVE state, similar to block 920.

Fig. 11 illustrates yet another example method 1100 the UE 102 or another suitable device can implement to determine whether data can be transmitted in an inactive state of the protocol for controlling radio resources.

The method 1100 begins at block 1101, where the UE 102 determines that information is available for transmission to the RAN. At block 1104, the UE 102 determines whether the information is associated with control-plane signaling or other data, similar to block 1004 in Fig. 10. When the information is associated with the control plane, the flow proceeds to block 1122, where the UE resumes the RRC connection with the RAN prior to transmitting the information, similar to block 1022. Otherwise, when the UE 102 determines that the information is data other than control-plane signaling, the flow proceeds to block 1106, where the UE 102 determines whether the data is associated with IMS, similar to block 906 of Fig. 9. When the data is associated with IMS, the flow proceeds to block 1122. When the UE 102 determines that the data is not associated with IMS, the flow proceeds to block 1120, where the UE 102 attempts to transmit the data in the RRC_INACTIVE state.

Fig. 12 is a flow diagram of another example method 1200, which the UE 102 or another suitable device can implement to determine whether data can be transmitted in an inactive state of the protocol for controlling radio resources.

The method 1100 begins at block 1201, where the UE 102 determines that information is available for transmission to the RAN. At block 1204, the UE 102 determines whether the information is associated with control-plane signaling or other data. When the information is associated with the control plane, the flow proceeds to block 1222, where the UE resumes the RRC connection with the RAN prior to transmitting the information. Otherwise, when the UE 102 determines that the information is data other than control-plane signaling, the flow proceeds to block 1206, where the UE 102 determines whether the data is associated with IMS. When the data is associated with IMS, the flow proceeds to block 1222.

When the UE 102 determines that the data is not associated with IMS, the flow proceeds to block 1208, where the UE 102 determines whether the size of the data is above a certain threshold value. Generally speaking, the threshold value can indicate what size of data (e.g., how large of an IP packet) the UE 102 can consider to be sufficiently small to avoid resuming the RRC connection prior to uplink transmission. In some implementations, the UE 102 and the base stations 104 and 106 are configured with a certain value corresponding to the number of bytes (e.g., 1 KB, 2 KB, 5 KB, 10 KB) the UE 102 is allowed to transmit in the uplink direction while remaining in RRC_INACTIVE. Depending on the implementation, the value applies to one individual packet or to the group of packets the UE 102 may attempt to transmit in RRC_INACTIVE (e.g., as a total limit). Further, in some implementations, this value can be RAT-dependent. In still other implementations, this value can be configurable, and the RAN 105 can broadcast this value in a system information block (SIB), for example. In any case, when the UE 102 determines that the size is above the threshold value, the flow proceeds to block 1222. Otherwise, the flow proceeds to block 1220, where the UE 102 attempts to transmit the data in the RRC_INACTIVE state.

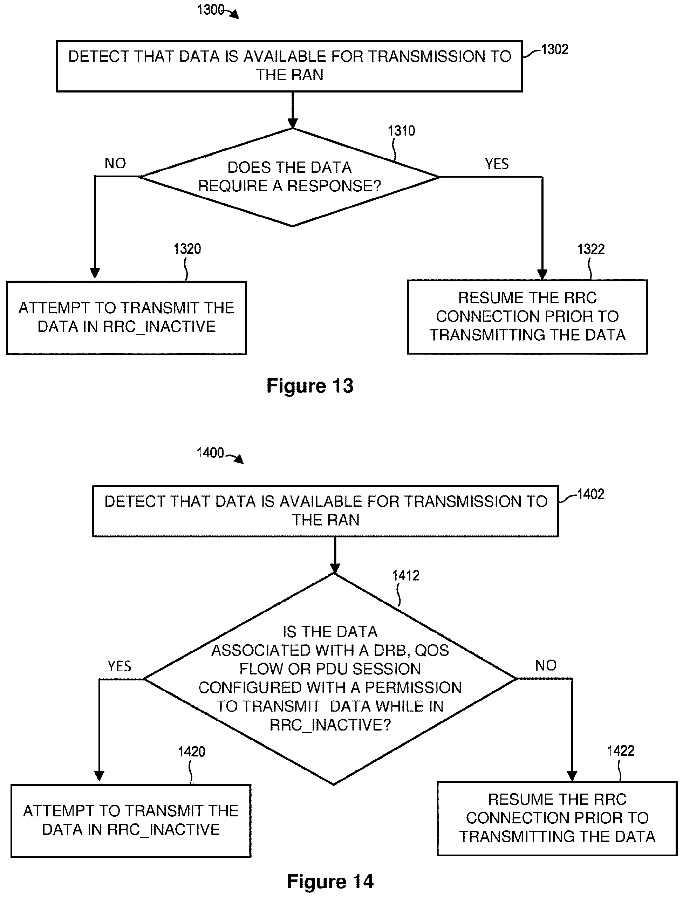

Fig. 13 is a flow diagram of still another example method 1300, which the UE 102 or another suitable device can implement to determine whether data can be transmitted in an inactive state of the protocol for controlling radio resources.

The method 1300 begins at block 1302, where the UE 102 detects that data is available for transmission to the RAN. At block 1310, the UE 102 determines whether the data requires a response from the RAN 105. When the UE determines that the data requires a response from the base station 104 or the base station 106, for example, rather than a remote host accessible with the CN 110 or an edge server, the flow proceeds to block 1322, where the UE resumes the RRC connection with the RAN prior to transmitting the data. Otherwise, when the UE 102 determines that the data does not require a response, the flow proceeds to block 1320, where the UE 102 attempts to transmit the data in the RRC_INACTIVE state.

Fig. 14 is a flow diagram of still another example method 1400, which the UE 102 or another suitable device can implement to determine whether data can be transmitted in an inactive state of the protocol for controlling radio resources.

The method 1400 begins at block 1402, where the UE 102 detects that data is available for transmission to the RAN. At block 1412, the UE 102 determines whether the data is associated with a DRB, a QoS flow, a PDCP session, etc. configured for transmission in RRC_INACTIVE. In other words, the UE 102 can include a configuration according to which the UE 102 can transmit data associated with DRB D₁ in the RRC_INACTIVE state, but cannot transmit data associated with DRB D₂ in the RRC_INACTIVE state. When the UE 102 determines that the configuration does not allow the UE 102 to transmit data of this kind (DRB, QoS flow, PDCP session) in the RRC_INACTIVE state, the flow proceeds to block 1422, where the UE resumes the RRC connection with the RAN prior to transmitting the data. Otherwise, when the UE 102 determines that the UE is allowed (has a permission to) transmit data associated with a certain DRB, QoS flow, PDCP session, the flow proceeds to block 1420, where the UE 102 attempts to transmit the data in the RRC_INACTIVE state.

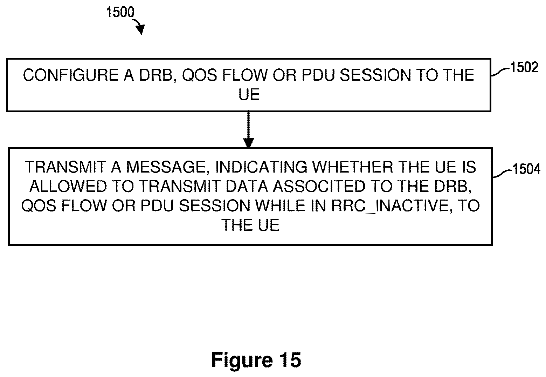

Fig. 15 is a flow diagram of still another example method 1500, which the base station 106 or another suitable base station can implement to configure a UE for transmitting data of a certain kind in the RRC_INACTIVE state. In particular, at block 1502, the base station 106 configures the UE 102 with a certain DRB, QoS flow, PDCP session, etc. At block 1504, the base station 106 transmits a message to the UE 102 to indicate whether the UE 102 is allowed to transmit data associated with the certain DRB, QoS flow, PDCP session, etc. while operating in the RRC inactive state. In some implementations, the base station 106 provides a flag or another explicit indicator such that the first value of the flag indicates that the UE 102 can transmit data of this kind in the RRC_INACTIVE state, and the second value of the flag indicates that the UE 102 cannot transmit data of this kind in the RRC_INACTIVE state. In other implementations, the base station 106 provides this indication implicitly, e.g., by not transmitting a flag when the UE 102 can transmit data of this kind in the RRC_INACTIVE state (to thereby allow the UE 102 to transmit in the RRC_INACTIVE state by default), and transmitting a flag only when the UE 102 cannot transmit data of this kind in the RRC_INACTIVE state.

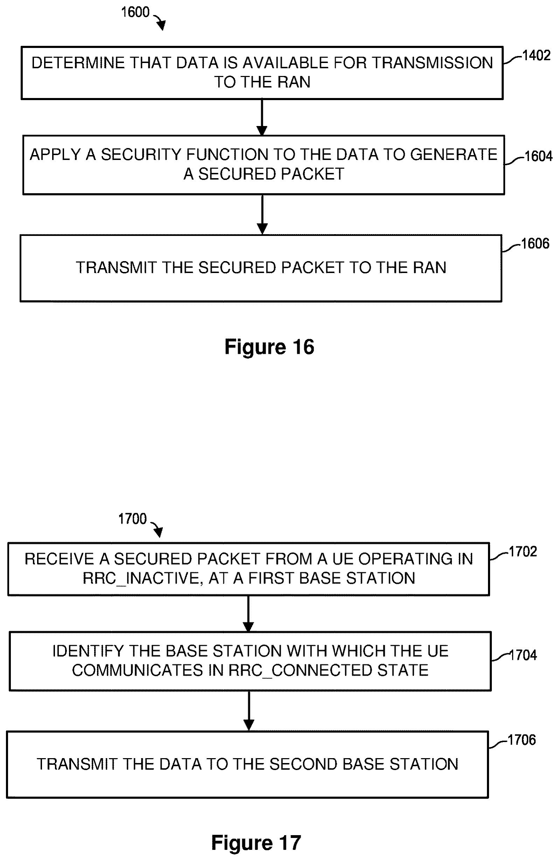

Next, Fig. 16 illustrates an example method 1600 for communicating data in an inactive state associated with a protocol for controlling radio resources, such as RRC_INACTIVE, which can be implemented in a suitable UE such as the UE 102, using software, hardware, firmware, etc., or any suitable combination of software, hardware, firmware, etc. By way of example, the method 1600 is discussed below with reference to the UE 102.

The method 1600 begins at block 1602, where the UE 102 determines that data is available for transmission to the RAN (events 608, 708, or 808; blocks 902, 1302; in some cases, blocks 1001, 1101, and 1201). At block 1604, the UE 102 applies a security function to the data to generate a secured packet (events 609, 709, 809). Next, at block 1606, the UE 102 transmits the secured packet to the RAN 105. As discussed above, the transmission can be successful (events 610, 710, 811) or unsuccessful with respect to the base station to which the UE 102 transmits the secured packet over a RAT (event 613). Moreover, as discussed with reference to Fig. 8D, the transmission can be successful with respect to the base station to which the UE 102 transmits the secured packet over a RAT but unsuccessful with respect to CN 110 (see event 855).

Finally, Fig. 17 is a flow diagram of an example method 1700 for processing a secured packet received from a UE operating in an inactive state associated with a protocol for controlling radio resources, which can be implemented in the base station 106, for example.

At block 1702, the base station 106 receives a secured packet from the UE operating in RRC_INACTIVE (event 610, 710, 811). At block 1704, the base station 106 identifies the base station with which the UE 102 communicated in RRC_CONNECTED, prior to transitioning to RRC_INACTIVE. At block 1706, the base station 106 forwards the data to a destination in accordance with the identified base station. The destination can be the identified base station (events 660, 850) or the core network or edge server (event 783, 883).

The following description may be applied to the description above.

Some implementations in the description above can apply to scenarios that the UE 102 in the RRC_INACTIVE state does not change a serving base station from the base station 104 to the base station 106.

A user device in which the techniques of this disclosure can be implemented (*e.g*., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g*., code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.*, as a special-purpose processor, such as a field programmable gate array (FPGA) or an application-specific integrated circuit (ASIC), a digital signal processor (DSP), etc.) to perform certain operations. A hardware module may also comprise programmable logic or circuitry (*e.g*., as encompassed within a general-purpose processor or other programmable processor) that is temporarily configured by software to perform certain operations. The decision to implement a hardware module in dedicated and permanently configured circuitry, or in temporarily configured circuitry (*e.g*., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

The following list of examples and aspects reflects a variety of the embodiments explicitly contemplated by the present disclosure.

Example 1. A method in a UE for communicating data in an inactive state associated with a protocol for controlling radio resources incudes determining, by processing hardware and when the UE is in the inactive state, that data is available for transmission to a radio access network (RAN); applying, by the processing hardware, a security function to the data to generate a secured packet; and transmitting, by the processing hardware, the secured packet to the RAN while the UE is in the inactive state.

Example 2. The method of example 1, further comprising: transitioning to the inactive state in response to a message from a first base station operating in the RAN; and selecting a cell associated with a second base station operating in the RAN for transmitting the secured packet.

Example 3. The method of example 1 or 2, further comprising: performing a random access procedure, wherein the secured packet is transmitted in an uplink message associated with the random access procedure.

Example 4. The method of example 3, further comprising: in response to determining that the RAN has not received the secured packet, re-transmitting the secured packet in an uplink message associated with a second random access procedure.

Example 5. The method of example 1 or 2, further comprising, in response to determining that the RAN has not received the secured packet: transmitting, to the RAN, a request to resume a radio connection; and re-transmitting the data in an uplink message after the radio connection is resumed.

Example 6. The method of example 5, wherein: generating the secured packet includes using a first security key; and re-transmitting the data includes applying a second security key to the data to generate a second secured packet.

Example 7. The method of example 1 or 2, further comprising, in response to determining that the RAN has not received the secured packet: transmitting, to the RAN, a request to set up a new radio connection; and re-transmitting the data in an uplink message after the new radio connection is set up.

Example 8. The method of example 7, further comprising: performing a security mode procedure after the new radio connection is set up and prior to re-transmitting the data.

Example 9. The method of any of the preceding examples, further comprising: obtaining, by the processing hardware from the RAN, a new security key for applying to the security function, after transitioning to the inactive state.

Example 10. The method of example 9, wherein the obtaining includes receiving, from the RAN, an indication that the UE is to transition to the inactive state, the indication including a counter value; and generating, by the processing hardware, the new security key using the counter value.

Example 11. The method of any of the preceding examples, wherein applying the security function includes using at least one of: an identity of a radio bearer over which the UE transmits the secured packet, a counter associated with the secured packet, or an indication of a direction in which the secured packet is transmitted.

Example 12. The method of any of the preceding examples, wherein applying the security function includes: applying an encryption function and an encryption key to generate encrypted data.

Example 13. The method of any of the preceding examples, wherein applying the security function includes: applying an integrity protection function and an integrity key to generate a message authentication code.

Example 14. The method of any of the preceding examples, further comprising: determining, by the processing hardware, that the UE is to transmit the data in the inactive state in response to determining that the data is not associated with an IP Multimedia Subsystem (IMS).

Example 15. The method of any of examples 1-13, further comprising:

determining, by the processing hardware, that the UE is to transmit the data in the inactive state in response to determining that the data is not associated with a control plane.

Example 16. The method of any of examples 1-13, further comprising: determining, by the processing hardware, that the UE is to transmit the data in the inactive state in response to determining that a size of the data is below a threshold value.

Example 17. The method of any of examples 1-13, further comprising: determining, by the processing hardware, that the UE is to transmit the data in the inactive state in response to determining that a message including the data requires no response from the RAN.

Example 18. The method of any of the preceding examples, further comprising: receiving, by the processing hardware and after transmitting the secured packet, a downlink secured packet from the RAN; and applying a security key used to generate the secured packet, to the downlink secured packet to retrieve downlink data.

Example 19. The method of any of the preceding examples, further comprising: including, by the processing hardware, an identifier of the UE in the secured packet.

Example 20. The method of example 19, wherein the identifier and the data are associated with a Packet Data Convergence Protocol (PDCP) layer.

Example 21. The method of example 19, wherein: the data is associated with a PDCP layer, and the identifier is associated with a media access control (MAC) layer.

Example 22. The method of any of the preceding examples, further comprising: resetting a transmission counter for uplink packets after transitioning to the inactive state.

Example 23. The method of any of examples 1- 21, further comprising: incrementing a transmission counter for uplink packets in an active state prior to transitioning to the inactive state; and continuing to increment the transmission counter after transitioning to the inactive state.

Example 24. The method of any of examples 1-21, further comprising: resetting a transmission counter for further uplink packets after transmitting the secured packet.

Example 25. A user equipment (UE) comprising processing hardware and configured to implement a method of any of the preceding examples.

Example 26. A method in a first base station for processing a secured packet from a UE, the method comprising: receiving, by processing hardware, the secured packet when the UE is operating in an inactive state associated with a protocol for controlling radio resources, the secured packet including data and an identity of the UE; identifying, by the processing hardware and based on the identity of the UE, a second base station with which the UE communicated in an active state prior to transitioning to the inactive state; and forwarding the data, by the processing hardware, in accordance with the identified base second station.

Example 27. The method of example 26, wherein forwarding the data includes transmitting the data to the second base station.

Example 28. The method of example 27, wherein transmitting the data to the second base station includes transmitting the secured packet.

Example 29. The method of example 27, further comprising: retrieving, by the processing hardware, a context of the UE from the second base station, the context including security information; obtaining, by the processing hardware from the security information, a security key for processing the secured packet.

Example 30. The method of example 29, further comprising: retrieving, by the processing hardware, the data from the secured packet using the security key.

Example 31. The method of example 29, further comprising: applying the security key to downlink data to generate a secured downlink packet; and transmit the secured downlink packet to the UE.

Example 32. The method of example 29, wherein the retrieving includes: transmitting, by the processing hardware to the UE, a request for context including an identity of the UE.

Example 33. The method of example 26, further comprising: receiving, by the processing hardware, a secured downlink packet from the second base station; and transmitting the secured downlink packet to the UE.

Example 34. The method of example 26, further comprising: failing to retrieve, by the processing hardware, a context of the UE from the second base station; in response to the failing, configuring a new radio connection between the first base station and the UE.

Example 35. The method of example 34, further comprising: performing a security mode procedure with the UE.

Example 36. The method of example 26, wherein forwarding the data includes transmitting the data to a core network.

Example 37. The method of example 26, wherein forwarding the data includes transmitting the data to an edge server.

Example 38. The method of example 36 or 37, further comprising: retrieving, by the processing hardware, the data from the secured packet.

Example 39. The method of example 38, further comprising: retrieving, by the processing hardware, a context of the UE from the second base station, the context including security information; and obtaining, by the processing hardware from the security information, a security key for processing the secured packet.

Example 40. A base station comprising processing hardware and configured to implement a method of any of examples 26-39.

Further embodiments of the present disclosure are set out in the following numbered aspects.
Aspect 1. A method in a user equipment (UE) for communicating data in an inactive state associated with a protocol for controlling radio resources, the method comprising:
   determining, by processing hardware and when the UE is in the inactive state, that data is available for transmission to a radio access network (RAN);
   applying, by the processing hardware, a security function to the data to generate a secured packet;
   performing a first random access procedure with the RAN, while the UE is in the inactive state, including transmitting the secured packet in an uplink message associated with the first random access procedure; and
   in response to determining that the RAN has not received the secured packet, performing at least one of:
      re-transmitting the secured packet in an uplink message associated with a second random access procedure, or
      transmitting, to the RAN, a request to resume or set up a radio connection.
Aspect 2. The method of aspect 1, further comprising:
   transitioning to the inactive state in response to a message from a first base station operating in the RAN; and
   selecting a cell associated with a second base station operating in the RAN for transmitting the secured packet.
Aspect 3. The method of aspect 1 or 2, including transmitting the request to resume the radio connection; the method further comprising:
   re-transmitting the data in an uplink message after the radio connection is resumed.
Aspect 4. The method of aspect 3, wherein:
   generating the secured packet includes using a first security key; and
   re-transmitting the data includes applying a second security key to the data to generate a second secured packet.
Aspect 5. The method of aspect 1 or 2, including transmitting the request to set up the radio connection; the method further comprising:
   re-transmitting the data in an uplink message after the radio connection is set up.
Aspect 6. The method of aspect 5, further comprising:
   performing a security mode procedure after the new radio connection is set up and prior to re-transmitting the data.
Aspect 7. The method of any of the preceding aspects, further comprising:
   obtaining, by the processing hardware from the RAN, a new security key for applying to the security function, after transitioning to the inactive state.
Aspect 8. The method of any of the preceding aspects, wherein applying the security function includes using at least one of:
   an identity of a radio bearer over which the UE transmits the secured packet,
   a counter associated with the secured packet, or
   an indication of a direction in which the secured packet is transmitted.
Aspect 9. The method of any of the preceding aspects, further comprising:
   receiving, by the processing hardware and after transmitting the secured packet, a downlink secured packet from the RAN; and
   applying a security key used to generate the secured packet, to the downlink secured packet to retrieve downlink data.
Aspect 10. The method of any of the preceding aspects, further comprising:
   resetting a transmission counter for uplink packets after transitioning to the inactive state.
Aspect 11. The method of any of aspects 1- 9, further comprising:
   incrementing a transmission counter for uplink packets in an active state prior to transitioning to the inactive state; and
   continuing to increment the transmission counter after transitioning to the inactive state.
Aspect 12. A user equipment (UE) comprising processing hardware and configured to implement a method of any of the preceding aspects.
Aspect 13. A method in a first base station for processing a secured packet from a UE, the method comprising:
   receiving, by processing hardware, the secured packet when the UE is operating in an inactive state associated with a protocol for controlling radio resources, the secured packet including data and an identity of the UE;
   identifying, by the processing hardware and based on the identity of the UE, a second base station with which the UE communicated in an active state prior to transitioning to the inactive state;
   forwarding the data, by the processing hardware, in accordance with the identified base second station;.
   failing to retrieve, by the processing hardware, a context of the UE from the second base station; and
   in response to the failing, configuring a new radio connection between the first base station and the UE.
Aspect 14. The method of aspect 13, further comprising:
   performing a security mode procedure with the UE.
Aspect 15. A base station comprising processing hardware and configured to implement a method of any of aspects 13 or 14.

## Claims

1. A method performed by a user equipment, UE, the method comprising:
determining, when the UE is in an inactive state associated with a protocol for controlling radio resources, that data is available for transmission to a radio access network, RAN; and
in response to determining that the data is associated with (i) control-plane signaling or (ii) a radio bearer not configured for transmission in the inactive state, resuming a suspended radio connection prior to transmitting the data.

2. The method of claim 1, further comprising:
in a second instance, in response to determining that the data is other than control-plane signaling, transmitting the data in the inactive state.

3. The method of claim 2, further comprising:
applying a security function to the data to generate a secured packet,
wherein the transmitting the data in the inactive state includes transmitting the secured packet.

4. The method of claim 3, further comprising:
performing a random access procedure, wherein the secured packet is transmitted in an uplink message associated with the random access procedure.

5. The method of claim 1, further comprising:
in a second instance, in response to determining that the radio bearer is configured for transmission in the inactive state, transmitting the data in the inactive state.

6. The method of any of the preceding claims, wherein:
the control-plane signaling is associated with a signaling radio bearer, SRB; and
data exchange on a user plane is associated with a data radio bearer, DRB.

7. The method of claim 5, wherein the control-plane signaling includes Radio Resource Control, RRC, messaging.

8. The method of any of the preceding claims, wherein the resuming of the suspended radio connection includes transmitting, to the RAN, an *RRC resume request* message.

9. The method of any of the preceding claims, wherein the data includes an RRC protocol data unit, PDU.

10. The method of claim 8, wherein the PDU includes a non-access stratum, NAS, PDU.

11. The method of claim 9 or 10, wherein the PDU is associated with a Packet Data Convergence Protocol, PDCP, layer.

12. The method of claim 1, further comprising:
performing a security mode procedure after the new radio connection is set up and prior to transmitting the data.

13. The method of claim 12, wherein the performing of the security mode procedure includes:
receiving, from the RAN, a *SecurityModeCommand* message; and
transmitting, to the RAN, a *SecurityModeComplete* message.

14. The method of claim 13, wherein the performing of the security mode procedures includes:
deriving a new base station key using a security configuration included in the *SecurityModeCommand* message.

15. A user equipment, UE, comprising processing hardware and a transceiver, the UE configured to implement a method of any of the preceding claims.
